(19) Europäisches Patentamt / European Patent Office / Office européen des brevets

(11) **EP 4 391 468 A1**

(12) **EUROPEAN PATENT APPLICATION**
published in accordance with Art. 153(4) EPC

(43) Date of publication:
**26.06.2024 Bulletin 2024/26**

(21) Application number: **22868995.6**

(22) Date of filing: **25.08.2022**

(51) International Patent Classification (IPC):
**H04L 27/26** $^{(2006.01)}$   **H04L 5/00** $^{(2006.01)}$

(52) Cooperative Patent Classification (CPC):
**H04L 5/00; H04L 27/26**

(86) International application number:
**PCT/CN2022/114851**

(87) International publication number:
**WO 2023/040621 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2021 CN 202111083177**

(71) Applicant: **Huawei Technologies Co., Ltd.
Shenzhen, Guangdong 518129 (CN)**

(72) Inventors:
• **MA, Qianli
Shenzhen, Guangdong 518129 (CN)**
• **HUANG, Huang
Shenzhen, Guangdong 518129 (CN)**
• **JU, Huiyang
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND RELATED APPARATUS**

(57) Embodiments of this application disclose a communication method and a related apparatus. The method includes: A communication apparatus determines a first signal, where the first signal includes a first reference signal and a first transformed signal, in time domain-frequency domain, the first reference signal is carried in one or more symbols of the first signal, and the first transformed signal is obtained by transforming a second reference signal in delay domain-Doppler domain. The communication apparatus sends the first signal. According to this method, phase noise in the first signal can be effectively processed.

FIG. 8

Processed by Luminess, 75001 PARIS (FR)

**Description**

This application claims priority to Chinese Patent Application No. 202111083177.9, filed with the China National Intellectual Property Administration on September 15, 2021 and entitled "COMMUNICATION METHOD AND RELATED APPARATUS", which is incorporated herein by reference in its entirety.

**TECHNICAL FIELD**

This application relates to the field of communication technologies, and in particular, to a communication method and a related apparatus.

**BACKGROUND**

High frequency bands (frequency bands higher than 6 GHz, mainly including 28 GHz, 39 GHz, 60 GHz, and 73 GHz) with rich frequency band resources have become a hot research and development topic in the industry to satisfy increasing communication requirements. The high frequency band can provide a large bandwidth and a highly integrated antenna array for communication to achieve a high throughput. However, a phase noise (phase noise, PHN) problem in the high frequency band is very prominent. At present, a phase tracking reference signal (phase tracking reference signal, PTRS) is introduced in high frequency band communication of a 5th generation mobile communication technology (5G), and is used for phase noise estimation and compensation.

An existing phase noise pilot solution is based on a conventional DFT-s-OFDM waveform or an OFDM waveform. For a waveform of orthogonal time-frequency transform, there is no solution design for how to process phase noise.

**SUMMARY**

According to a first aspect, this application provides a communication method. The method includes: A communication apparatus determines a first signal, where the first signal includes a first reference signal and a first transformed signal, in time domain-frequency domain, the first reference signal is carried in one or more symbols of the first signal, and the first transformed signal is obtained by transforming a second reference signal in delay domain-Doppler domain. The communication apparatus sends the first signal. According to this method, phase noise in the first signal can be effectively processed.

With reference to the first aspect, in a possible implementation, the first reference signal is used to determine channel information of a channel for transmitting the first signal. The second reference signal is used to determine phase noise in the channel for transmitting the first signal.

With reference to the first aspect, in a possible implementation, a location index set of the second reference signal in delay domain corresponding to the first signal is A, and a location index set of the second reference signal in Doppler domain corresponding to the first signal is B. B = {x: a ≤ x ≤ b, x is an integer}. a is a minimum value of location indexes in Doppler domain corresponding to the first signal, and b is a maximum value of the location indexes in Doppler domain corresponding to the first signal.

With reference to the first aspect, in a possible implementation, elements in A are formed by one or more arithmetic progressions.

With reference to the first aspect, in a possible implementation, a location index set of the second reference signal in delay domain corresponding to the first signal is A, and a location index set of the second reference signal in Doppler domain corresponding to the first signal is B. Elements in A are formed by one or more arithmetic progressions, and elements in B are formed by one or more arithmetic progressions.

With reference to the first aspect, in a possible implementation, a third reference signal is further included in delay domain-Doppler domain corresponding to the first signal, a location index set of the second reference signal in delay domain corresponding to the first signal is A, a location index set of the second reference signal in Doppler domain corresponding to the first signal is B, a location index set of the third reference signal in delay domain corresponding to the first signal is C, and a location index set of the third reference signal in Doppler domain corresponding to the first signal is D. B = {j}, where a ≤ j ≤ b. D={x: a ≤ x ≤ b, x ≠ j, x is an integer}. a is a minimum value of location indexes in Doppler domain corresponding to the first signal, and b is a maximum value of the location indexes in Doppler domain corresponding to the first signal. Alternatively, B= {k, k+1}, where a ≤ k ≤ b- 1. D={x: a ≤ x ≤ b, x ≠ k, x ≠ k + 1, x is an integer} .

With reference to the first aspect, in a possible implementation, elements in A are formed by one or more arithmetic progressions, and A is equal to C.

With reference to the first aspect, in a possible implementation, a location index set of the second reference signal in delay domain corresponding to the first signal is A, and a location index set of the second reference signal in Doppler domain corresponding to the first signal is B. A={x: p ≤ x ≤ q, x is an integer}, p is a minimum value of location indexes in delay domain corresponding to the first signal, and q is a maximum value of the location indexes in delay domain corresponding to the first signal.

With reference to the first aspect, in a possible implementation, a third reference signal is further included in delay domain-Doppler domain corresponding to the first signal, a location index set of the third reference signal in delay domain corresponding to the first signal is C, and a location index set of the third reference signal in Doppler domain corresponding to the first signal is D. C={x: $p \leq x \leq q$, x is an integer}. B={j}, where $a \leq j \leq b$. D={x: mod(max(B)-c, b) $\leq$ $x \leq$ mod(max(B) + b, b), $x \neq j$, x is an integer}. a is a minimum value of location indexes in Doppler domain corresponding to the first signal, b is a maximum value of the location indexes in Doppler domain corresponding to the first signal, and c is a positive integer. Alternatively, B = {k, k+1}, where $a \leq k \leq b-1$. D={x: mod(max(B)- c, b) $\leq x \leq$ mod(max(B) + b, b), $x \neq k$, $x \neq k + 1$, x is an integer}.

With reference to the first aspect, in a possible implementation, elements in B are formed by one or more arithmetic progressions.

According to a second aspect, this application provides a communication method. The method includes: A communication apparatus determines a first signal, where the first signal includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain. The communication apparatus sends the first signal. With reference to the second aspect, in a possible implementation, the first reference signal is used to determine channel information of a channel for transmitting the first signal. The second reference signal is used to determine phase noise in the channel for transmitting the first signal. With reference to the second aspect, in a possible implementation, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A third reference signal is further included in delay domain-Doppler domain corresponding to the first signal, a location index set of the third reference signal in delay domain corresponding to the first signal is C, and a location index set of the third reference signal in Doppler domain corresponding to the first signal is D. B = {x: $a \leq x \leq b$, x is an integer}. F={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F = {k, k+1}, where $a \leq k \leq b- 1$. D={x: $a \leq x \leq b$, $x \neq k$, $x \neq k + 1$, x is an integer}.

With reference to the second aspect, in a possible implementation, a value range of elements in A is [p, k], the elements in A are formed by one or more arithmetic progressions, $p < k < q,$ p is a minimum value of location indexes in delay domain corresponding to the first signal, and q is a maximum value of the location indexes in delay domain corresponding to the first signal. E={x: $k + 1 \leq x \leq q$, x is an integer}, and C={x: $k + 1 \leq x \leq q$, x is an integer}.

With reference to the second aspect, in a possible implementation, a location index set of the first reference signal in delay domain corresponding to the first signal is E, and a location index set of the first reference signal in Doppler domain corresponding to the first signal is F. A third reference signal is further included in delay domain-Doppler domain corresponding to the first signal, a location index set of the third reference signal in delay domain corresponding to the first signal is C, and a location index set of the third reference signal in Doppler domain corresponding to the first signal is D. F = {j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F={k, k+1}, where $a \leq k \leq b-1$. D={x: $a \leq x \leq b$, $x \neq k$, $x \neq k + 1$, x is an integer}. A value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal. A value range of elements in B is [a, b], and the elements in B are formed by one or more arithmetic progressions. E={x: $k + 1 \leq x \leq q$, x is an integer}, and C={x: $k + 1 \leq x \leq q$, x is an integer}.

With reference to the second aspect, in a possible implementation, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A third reference signal is further included in delay domain-Doppler domain corresponding to the first signal, a location index set of the third reference signal in delay domain corresponding to the first signal is C, and a location index set of the third reference signal in Doppler domain corresponding to the first signal is D. F= {j}, and B={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F = {k, k+1 }, and B= {k, k+1}, where $a \leq k \leq b- 1$. D={x: $a \leq x \leq b$, $x \neq k$, $x \neq k + 1$, x is an integer}. A value range of elements in A is [p, k], the elements in A are formed by one or more arithmetic progressions, $p < k < q,$ p is a minimum value of location indexes in delay domain corresponding to the first signal, and q is a maximum value of the location indexes in delay domain corresponding to the first signal. E={x: k + 1 ≤ x ≤ q, x is an integer}, and C=E U A.

With reference to the second aspect, in a possible implementation, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A={x: p ≤ x ≤ k, x is an integer}, p < k < q, p is a minimum value of location indexes in delay domain corresponding to the first signal, and q is a maximum value of the location indexes in delay domain corresponding to the first signal. E={x: k + 1 ≤ x ≤ q, x is an integer}.

With reference to the second aspect, in a possible implementation, a third reference signal is further included in delay domain-Doppler domain corresponding to the first signal, a location index set of the third reference signal in delay domain corresponding to the first signal is C, and a location index set of the third reference signal in Doppler domain corresponding to the first signal is D. C=E. F={j}, where a ≤ j ≤ b. D={x: a ≤ x ≤ b, x ≠ j, x is an integer}. a is a minimum value of location indexes in Doppler domain corresponding to the first signal, and b is a maximum value of the location indexes in Doppler domain corresponding to the first signal. Alternatively, F = {k, k+1}, where a ≤ k ≤ b-1; and D={x: a ≤ x ≤ b, x ≠ k, x ≠ k + 1, x is an integer}. A value range of B is [a, b], and the elements in B are formed by one or more arithmetic progressions. With reference to the second aspect, in a possible implementation, a third reference signal is further included in delay domain-Doppler domain corresponding to the first signal, a location index set of the third reference signal in delay domain corresponding to the first signal is C, and a location index set of the third reference signal in Doppler domain corresponding to the first signal is D. C={x: p ≤ x ≤ q, x is an integer}. F={j}, and B={j}, where a ≤ j ≤ b; D={x: a ≤ x ≤ b, x ≠ j, x is an integer}. a is a minimum value of location indexes in Doppler domain corresponding to the first signal, and b is a maximum value of the location indexes in Doppler domain corresponding to the first signal. Alternatively, F = {k, k+1}, and B= {k, k+1}, where a ≤ k ≤ b- 1. D={x: a ≤ x ≤ b, x ≠ k, x ≠ k + 1, x is an integer}. A location index set in Doppler domain corresponding to a delay domain [p, k] of the third reference signal is G. G={x: mod(max(B)- c, b) ≤ x ≤ mod(max(B) + b, b), x ≠ j, x is an integer}. Alternatively, G={x: mod(max(B)- c, b) ≤ x ≤ mod(max(B) + b, b), x ≠ k, x ≠ k + 1, x is an integer}, and c is a positive integer.

According to a third aspect, this application provides a communication apparatus. The communication apparatus has some or all functions of implementing the communication apparatus in the method example according to the first aspect or the method example according to the second aspect. For example, functions of the communication apparatus may include functions in some or all embodiments of this application, or may include functions of independently implementing any embodiment of this application. The function may be implemented by hardware, or may be implemented by hardware executing corresponding software. The hardware or software includes one or more units or modules corresponding to the foregoing functions.

In an implementation, a structure of the communication apparatus may include a processing unit and a transceiver unit. The processing unit is configured to support the communication apparatus in performing a corresponding function in the foregoing method. The transceiver unit is configured to support communication between the communication apparatus and another device. The communication apparatus may further include a storage unit. The storage unit is configured to be coupled to the processing unit and the sending unit, and stores a computer program and data that are necessary for the communication apparatus.

In an implementation, the communication apparatus includes: a processing unit, configured to determine a first signal, where the first signal includes a first reference signal and a first transformed signal, in time domain-frequency domain, the first reference signal is carried in one or more symbols of the first signal, and the first transformed signal is obtained by transforming a second reference signal in delay domain-Doppler domain; and a transceiver unit, configured to send the first signal.

In an implementation, the communication apparatus includes: a processing unit, configured to determine a first signal, where the first signal includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain; and a transceiver unit, configured to send the first signal.

For example, the processing unit may be a processor, the transceiver unit may be a transceiver or a communication interface, and the storage unit may be a memory.

In an implementation, the communication apparatus includes a processor, and the processor is coupled to a memory. The memory is configured to store program code. The processor is configured to invoke the program code from the memory to perform the method described in any one of the first aspect or the possible implementations of the first aspect, or perform the method described in any one of the second aspect or the possible implementations of the second aspect.

According to a fourth aspect, this application provides a communication apparatus. The communication apparatus includes a logic circuit and an input/output interface. The logic circuit is configured to determine a first signal. The input/output interface is configured to output the first signal. The logic circuit is further configured to process the first signal, and perform the method described in any one of the first aspect or the possible implementations of the first aspect.

According to a fifth aspect, this application provides a communication apparatus. The communication apparatus includes a logic circuit and an input/output interface. The logic circuit is configured to determine a first signal. The input/output interface is configured to output the first signal. The logic circuit is further configured to process the first signal, and perform the method described in any one of the second aspect or the possible implementations of the second aspect. According to a sixth aspect, this application provides a computer-readable storage medium. The computer-readable storage medium is configured to store instructions. When the instructions are executed, the method described in any one of the first aspect or the possible implementations of the first aspect is implemented, or the method described in any one of the second aspect or the possible implementations of the second aspect is implemented.

According to a seventh aspect, this application provides a computer program product. The computer program product includes a computer program or instructions, and when the computer program or the instructions are run on a computer, the computer is enabled to perform the method described in any one of the first aspect or the possible implementations of the first aspect, or perform the method described in any one of the second aspect or the possible implementations of the second aspect.

In this embodiment, a first signal at a signal transmit end includes a first reference signal and a first transformed signal, in time domain-frequency domain, the first reference signal is carried in one or more symbols of the first signal, and the first transformed signal is obtained by transforming a second reference signal in delay domain-Doppler domain. In this way, a signal receive end can effectively process phase noise based on the received first signal.

**BRIEF DESCRIPTION OF DRAWINGS**

To describe technical solutions of embodiments of this application or in a conventional technology more clearly, the following briefly describes the accompanying drawings for describing embodiments or the conventional technology.

FIG. 1 is a schematic diagram of a network architecture according to an embodiment of this application;
FIG. 2 is a schematic diagram of a processing procedure of an SC-QAM technology according to an embodiment of this application;
FIG. 3 is a schematic diagram of a processing procedure of a DFT-s-OFDM technology according to an embodiment of this application;
FIG. 4 is a schematic diagram of a processing procedure of an OTFS technology at a signal transmit end according to an embodiment of this application;
FIG. 5 is a schematic diagram of a mapping relationship between a delay domain-Doppler domain and a time domain-frequency domain according to an embodiment of this application;
FIG. 6 is a schematic diagram of a processing procedure of an OTFS technology at a signal receive end according to an embodiment of this application;
FIG. 7 is a schematic diagram of Block-PTRSs of some DFT-s-OFDM signals according to an embodiment of this application;
FIG. 8 is a flowchart of a communication method according to an embodiment of this application;
FIG. 9 is a schematic diagram of a first signal according to an embodiment of this application;
FIG. 10A to FIG. 10L are schematic diagrams of patterns of some reference signals according to an embodiment of this application;
FIG. 11 is a schematic flowchart of processing a first signal by a signal transmit end according to an embodiment of this application;
FIG. 12 is a schematic flowchart of processing a second signal by a signal receive end according to an embodiment of this application;
FIG. 13 is a flowchart of still another communication method according to an embodiment of this application;
FIG. 14A to FIG. 14J are schematic diagrams of patterns of some reference signals according to an embodiment of this application;
FIG. 15 is still another schematic flowchart of processing a first signal by a signal transmit end according to an embodiment of this application;
FIG. 16 is still another schematic flowchart of processing a second signal by a signal receive end according to an embodiment of this application;
FIG. 17 is a schematic diagram of a structure of a communication apparatus according to an embodiment of this application;
FIG. 18 is a schematic diagram of another structure of a communication apparatus according to an embodiment of this application; and
FIG. 19 is a schematic diagram of a structure of a chip according to an embodiment of this application.

## DESCRIPTION OF EMBODIMENTS

The following describes the technical solutions in embodiments of this application in more detail. Terms used in the following embodiments of this application are merely for the purpose of describing specific embodiments, but are not intended to limit this application. As used in the specification and the appended claims of this application, the singular expressions "a", "one", "said", "the foregoing", "the", and "this" are intended to include also the plural expression, unless the context expressly indicates the contrary. It should be further understood that the term "and/or" as used in this application refers to and includes any or all possible combinations of one or more of the listed items. The term "a plurality of" used in this application means two or more.

It should be further understood that, "first", "second", "third", "fourth", and various numbers in this specification are merely used for differentiation for ease of description, and are not intended to limit the scope of embodiments of this application.

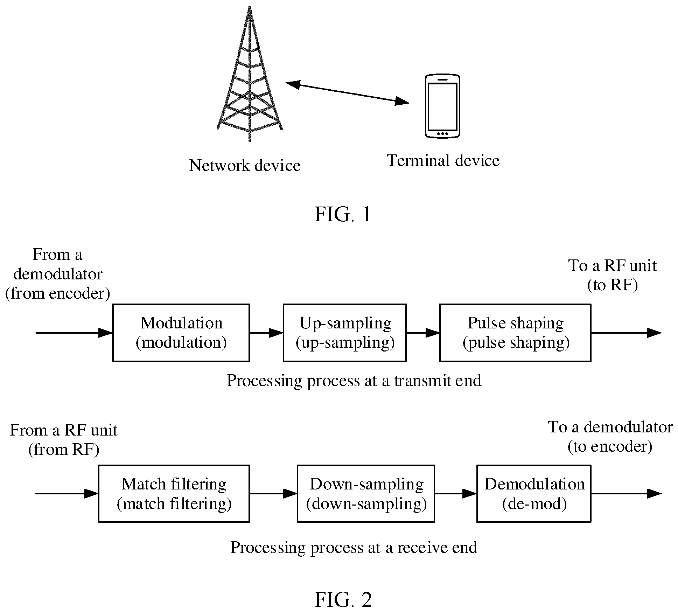

Embodiments of this application may be applied to a network architecture shown in FIG. 1. The network architecture shown in FIG. 1 is a network architecture of a wireless communication system. The network architecture usually includes a terminal device and a network device. A quantity and a form of each device constitute no limitation on embodiments of this application. For example, embodiments of this application may be applied to a scenario in which a multi-layer single carrier may be applied, for example, multi-station transmission (same UE simultaneously transmits signals with a plurality of transmission points), backhaul, wireless to the x (wireless to the x, WTTx), enhanced mobile broadband (enhanced mobile broadband, eMBB), and device to device (device to device, D2D). In embodiments of this application, the terminal device and the network device may communicate with each other by using a single carrier.

It should be noted that the wireless communication system mentioned in embodiments of this application includes but is not limited to an internet of things (internet of things, IoT) system, a long term evolution (long term evolution, LTE) system, a 5th generation mobile communication (5th-generation, 5G) system, a 6th generation mobile communication (6th-generation, 6G) system, and a future mobile communication system. In some embodiments, the technical solutions in embodiments of this application may be further applied to a wireless local area network (Wireless Local Area Network, WLAN) network, may be further applied to a vehicle-to-X (Vehicle-to-X, V2X) network, may be further applied to a non-terrestrial network (non-terrestrial network, NTN), a satellite and high-altitude platform (satellites and High-Altitude Platforms, HAP) network, an enhanced internet of things (LTE enhanced MTO, eMTC), and may be further applied to another network. In some other embodiments, the technical solutions in embodiments of this application may be further applied to a communication-radar integrated communication system, a terahertz communication system, a communication system with a higher frequency, and the like. This is not specifically limited in this application.

The network device in embodiments of this application may be a base station (Base Station, BS). The base station may provide communication services for a plurality of terminal devices, or a plurality of base stations may provide communication services for a same terminal device. In embodiments of this application, the base station is an apparatus deployed in a radio access network to provide a wireless communication function for a terminal device. The base station device may be a base station, a relay station, or an access point. The base station may be an eNB or an eNodeB (evolved NodeB) in long term evolution (Long Term Evolution, LTE). Alternatively, the base station device may be a radio controller in a cloud radio access network (Cloud Radio Access Network, CRAN) scenario. Alternatively, the base station device may be a base station device in a future 5G network or a network device in a future evolved PLMN network. Alternatively, the base station device may be a wearable device, a vehicle-mounted device, or the like. In embodiments of this application, an apparatus configured to implement functions of a network device may be a network device, or may be an apparatus that can support the network device in implementing the functions, for example, a chip system. The apparatus may be installed in the network device.

The terminal device in embodiments of this application may also be referred to as a terminal, and may be a device with wireless receiving and sending functions. The terminal device in embodiments of this application may include various user equipments (user equipment, UE) that have a wireless communication function, an access terminal, a UE unit, a UE station, a mobile site, a mobile station, a remote terminal, a mobile device, a UE terminal, a terminal, a wireless communication device, a UE agent, or a UE apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an unmanned aerial vehicle (or referred to as a drone for short) (unmanned aerial vehicle/drones, UVA), a vehicle-mounted device, a wearable device, a terminal device in a future 5G network, a terminal device in a future evolved PLMN network, or the like. In embodiments of this application, an apparatus configured to implement functions of a terminal may be a terminal; or may be an apparatus that can support the terminal in implementing the functions, for example, a chip system. The apparatus may be installed in the terminal. In embodiments of this application, the chip system may include a chip, or may include a chip and another discrete component.

Embodiments of this application may be applied to a device to device (device to device, D2D) system, a machine to machine (machine to machine, M2M) system, a vehicle to everything (vehicle to everything, V2X) system, or the like.

Embodiments of this application may be applied to a next generation microwave scenario, an NR-based microwave scenario, an integrated access backhaul (integrated access backhaul, IAB) scenario, or the like.

Embodiments of this application may be applied to an uplink transmission scenario, that is, a scenario in which the terminal device sends an uplink signal to the network device; and may also be applied to a downlink transmission scenario, that is, a scenario in which the network device sends a downlink signal to the terminal device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some concepts in embodiments of this application.

(1) Peak to average power ratio (peak to average power ratio, PAPR)

A radio signal is a sine wave with a changing amplitude in time domain. The amplitude is not constant. An amplitude peak of the signal in one period is different from those in other periods. Therefore, average powers and peak powers of all periods are different. A peak power is a maximum transient power that occurs with a probability over a long period of time, and the probability is usually 0.01% (namely, 10^-4). A ratio of the peak power under this probability to a total average power of the system is a PAPR.

The signal of the wireless communication system needs to be amplified in power before being sent far away. Due to a limitation of technology and equipment costs, a power amplifier usually performs linear amplification in only one range. If the range is exceeded, signal distortion is caused. The signal distortion causes a receive end that receives a signal to be unable to correctly parse the signal. To ensure that the peak value of the signal is still within the linear range in which the power amplifier can normally perform power amplification, the average power of the sent signal needs to be reduced. This manner leads to low efficiency of the power amplifier, or is equivalent to a smaller coverage area.

Because a signal of orthogonal frequency division multiplexing (orthogonal frequency division multiplexing, OFDM) on a carrier is represented as a sine (sinc) function, there are tails on left and right sides. In a probability, tails of a plurality of carriers may be superimposed at a distance to form a point with a very large peak power. In other words, use of an OFDM waveform easily causes a problem that the PAPR is excessively high.

(2) Single carrier

The single carrier has a lower PAPR than an OFDM waveform. Therefore, in a high-frequency scenario, a single-carrier waveform is used to transmit data. The single carrier includes but is not limited to the following waveforms: a single carrier-quadrature amplitude modulation (single carrier-quadrature amplitude modulation, SC-QAM) waveform, a discrete Fourier transform spread OFDM (discrete Fourier transform spread orthogonal frequency division multiplexing, DFT-s-OFDM) waveform, a DFT-s-OFDM waveform with separated real and imaginary parts, a single carrier-offset quadrature amplitude modulation (Single carrier-Offset quadrature amplitude modulation, SC-OQAM) waveform, a single carrier transform spread orthogonal frequency division multiplexing (discrete Fourier transform spread orthogonal frequency division multiplexing, DFT-s-OFDM with FTSS) waveform, a DFT-s-OFDM waveform carrying pulse amplitude modulation (pulse amplitude modulation, PAM), a DFT-s-OFDM waveform carrying a PAM constellation and a shaping filter, a DFT-s-OFDM waveform carrying a shaping filter with separated real and imaginary parts, a unique word discrete Fourier transform spread orthogonal frequency division multiplexing (unique word discrete Fourier transform spread OFDM, uw-DFT-s-OFDM) waveform, a uw-DFT-s-OFDM waveform with separated real and imaginary parts, a uw-DFT-s-OFDM waveform with frequency-domain truncated spectrum shaping (uw-DFT-s-OFDM with FTSS), a uw-DFT-s-OFDM waveform carrying a PAM constellation, a uw-DFT-s-OFDM waveform carrying a shaping filter with separated real and imaginary parts, a uw-DFT-s-OFDM waveform carrying a PAM constellation and a shaping filter, a zero tail discrete Fourier transform spread orthogonal frequency division multiplexing (zero tail discrete Fourier transform spread OFDM, zt-DFT-s-OFDM) waveform, a zt-DFT-s-OFDM waveform with frequency-domain truncated spectrum shaping (zt-DFT-s-OFDM with FTSS), a zt-DFT-s-OFDM waveform with separated real and imaginary parts, a zt-DFT-s-OFDM waveform carrying a PAM constellation, a zt-DFT-s-OFDM waveform carrying a shaping filter with separated real and imaginary parts, a zt-DFT-s-OFDM waveform carrying a PAM constellation and a shaping filter, and the like. It should be noted that the waveform is named based on a feature of the waveform. In actual application, the waveform may also be named in another manner.

The SC-QAM is a common single-carrier waveform technology, and is widely used in a 2nd generation mobile communication (2nd-generation, 2G) and a Wi-Fi communication system. For processing procedures of a transmit end and a receive end of the SC-QAM, refer to FIG. 2. Specifically, for the transmit end, a communication signal is obtained from an encoder (encoder), modulation (modulation), up-sampling (up-sampling), and pulse shaping (pulse shaping) are sequentially performed on the communication signal, and then the signal is sent by using a radio frequency (radio frequency, RF) unit. For the receive end, a communication signal is obtained from a radio frequency unit, match filtering (match filtering), down-sampling (down-sampling), and demodulation (de-mod) are sequentially performed on the communication signal, and then the communication signal is sent to an encoder (encoder) for processing. It can be seen that sending and receiving of the SC-QAM are both completed in time domain, and time domain-frequency domain transform is not involved. Therefore, there is no fast Fourier transform (fast Fourier transform, FFT)/inverse fast Fourier transform (inverse fast Fourier transform, IFFT) process, and only time domain match filtering, up-sampling, and down-sampling are required. Therefore, compared with a multi-carrier system, the SC-QAM has advantages of low complexity and a low PAPR.

The DFT-s-OFDM is a single-carrier waveform technology based on the OFDM implementation architecture. Compared with the OFDM waveform, the DFT-s-OFDM waveform provides a higher output power and higher power amplification efficiency at same power amplification, thereby improving coverage and reducing power consumption. Currently, in a long term evolution (long term evolution, LTE) system and a 5th generation (5th-generation, 5G) (or referred to as a new radio (new radio, NR)) communication system, a DFT-s-OFDM waveform may be applied to uplink transmission. However, in high frequency communication, the PAPR problem is severe because a component capability is limited. Therefore, the DFT-s-OFDM waveform may also be applied to downlink transmission in the future. The frequency band of the high frequency communication may be 24250 MHz to 52600 MHz in the NR system, may be a frequency band above 52600 MHz supported by subsequent evolution of the NR system, or may be a higher frequency band of the next generation communication system, for example, a terahertz (THz) frequency band.

In the DFT-s-OFDM technology, additional discrete Fourier transform (discrete Fourier transform, DFT) processing is performed before the OFDM processing. Therefore, the DFT-s-OFDM technology may also be referred to as a linear precoding OFDM technology.

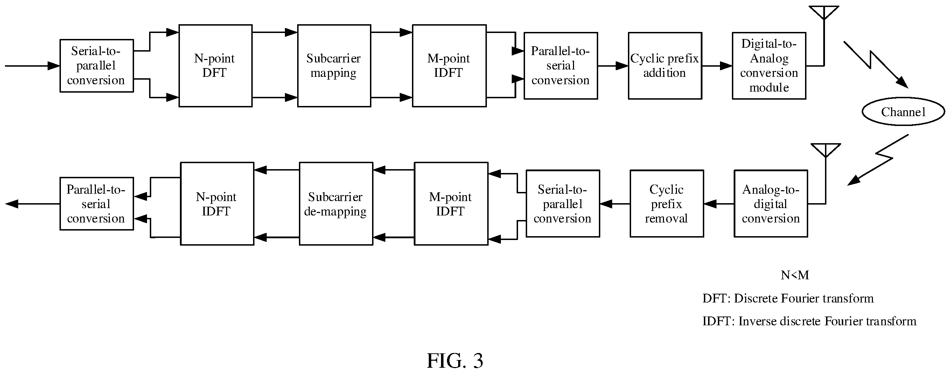

FIG. 3 is a schematic diagram of a processing procedure of a DFT-s-OFDM technology according to an embodiment of this application. A transmit end sequentially performs serial-to-parallel (serial-to-parallel) conversion and N-point discrete Fourier transform (discrete Fourier transform, DFT), subcarrier mapping, M-point inverse discrete Fourier transform (inverse discrete Fourier transform, IDFT), parallel-to-serial (parallel-to-serial) conversion, cyclic prefix (cyclic prefix, CP) addition, and digital-to-analog conversion (digital-to-analog conversion, DAC) processing on a time-domain discrete sequence, and then sends a signal through an antenna port and a channel (channel). When receiving the signal through the channel and the antenna port, a receive end sequentially performs analog-to-digital conversion (analog-to-digital conversion, ADC), cyclic prefix removal, serial-to-parallel (serial-to-parallel) conversion, M-point DFT, subcarrier de-mapping, N-point IDFT, and parallel-to-serial (parallel-to-serial) conversion on the signal, to obtain the time-domain discrete sequence.

The transmit end may obtain a frequency-domain sequence of the time-domain discrete sequence through N-point DFT. The frequency-domain sequence is input for IDFT after being subject to subcarrier mapping, and is subject to M-point IDFT, where N<M. Because a length of the IDFT is greater than a length of the DFT, an extra part of the IDFT is filled with zeros during input. After the IDFT, a cyclic prefix may be added to avoid symbol interference.

Compared with the OFDM, the DFT-s-OFDM has advantages of a lower PAPR and lower complexity of a transmitter. For a high frequency and a large bandwidth, the single-carrier waveform SC-QAM or DFT-s-OFDM has specific advantages over the OFDM.

(3) Subcarrier

The OFDM technology is different from a spreading technology used in wideband code division multiple access (wideband code division multiple access, WCDMA). A bandwidth occupied by each symbol (symbol) is 3.84 M, and anti-interference is performed by using a spreading gain. In the OFDM, each symbol corresponds to one orthogonal subcarrier, and anti-interference is implemented through orthogonality between carriers. According to the protocol, a subcarrier spacing is 15 kHz in a normal case. In a case of normal cyclic prefix (Normal Cyclic Prefix), one slot (slot) of each subcarrier has seven symbols. In a case of extended cyclic prefix (Extended Cyclic Prefix), one slot of each subcarrier has six symbols.

(4) Two-dimensional waveform based on orthogonal time-frequency transform

An orthogonal time-frequency space/spread (orthogonal time-frequency space/spread, OTFS) technology is a new two-dimensional modulation technology. A main technical feature of the orthogonal time-frequency space/spread technology is that a signal (for example, a constellation symbol) is placed in newly-created delay domain-Doppler domain, and equivalent transform is performed on a conventional time domain-frequency domain through two-dimensional even Fourier transform, to finally form a common time division multiple access (time division multiple access, TDMA), code division multiple access (code division multiple access, CDMA), and OFDM waveform for transmission.

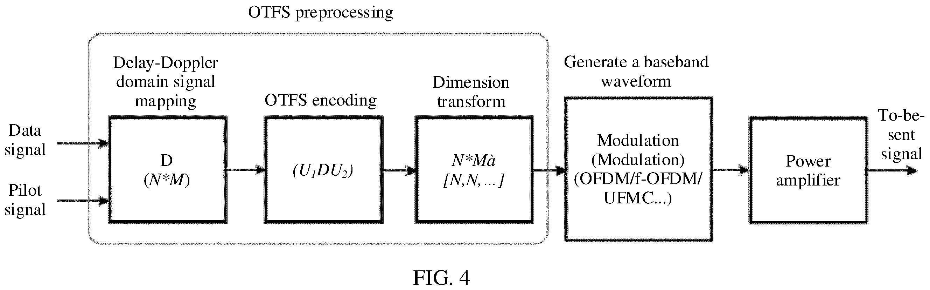

FIG. 4 is a schematic diagram of a processing procedure of an OTFS technology at a signal transmit end according to an embodiment of this application. Different from a conventional waveform generation manner, in the OTFS technology, a data signal and a pilot signal need to undergo an OTFS preprocessing process. The OTFS preprocessing process may be divided into three parts: signal mapping, OTFS precoding, and dimensional transform of the signal in delay domain-Doppler domain. Alternatively, the OTFS technology may be understood as an inter-symbol Fourier transform based on the DFT-s-OFDM. Then, a baseband waveform is generated through modulation (modulation) based on a signal obtained after OTFS preprocessing, and a to-be-sent signal is generated after the baseband waveform is processed by a power amplifier.

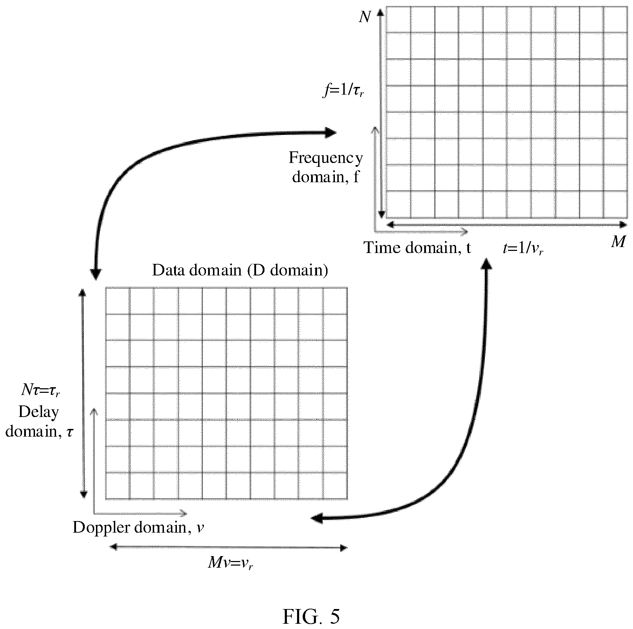

FIG. 5 is a schematic diagram of a mapping relationship between a delay domain-Doppler domain and a time domain-frequency domain according to an embodiment of this application. Specifically, the delay domain-Doppler domain may be represented by a two-dimensional matrix D whose length of N*M. A first dimension represents the delay domain, and a second dimension represents the Doppler domain. All transmission information includes data information and pilot information.

For example, the data information may be a PSK signal, a QAM constellation symbol, or the like.

The pilot information includes a pilot sequence known by a receive end, and is used for channel estimation. The transmission information is mapped to the matrix D. To accurately estimate channel information in delay domain-Doppler domain, the pilot signal usually occupies a location of a submatrix in the matrix D. Optionally, a cell in delay domain-Doppler domain may be referred to as a resource element (resource element, RE).

After the mapping is completed, OTFS encoding, that is, an OTFS encoding operation, needs to be performed on the matrix D whose length is N*M. The OTFS encoding includes left multiplying the matrix D whose length is N*M by an orthogonal base matrix U1 whose dimension is N*N, and right multiplying an orthogonal base matrix U2 whose dimension is M*M. An orthogonal base matrix for encoding may be randomly selected, and a most common orthogonal base matrix is a DFT/IDFT matrix. Effect achieved by the OTF encoding is that a signal in delay domain-Doppler domain of OTFS is mapped to time domain-frequency domain, so that the signal can be mapped to a conventional time domain waveform for final signal sending.

After the OTFS encoding is completed, a two-dimensional time domain-frequency domain signal whose length is N*M is obtained. As shown in FIG. 5, a physical meaning of a signal at any point (n, m) in time domain-frequency domain signals is a signal in an $n^{th}$ frequency domain in an $m^{th}$ unit time. For convenience of postprocessing, frequency domain signals in each unit time are arranged in order, to generate a final time domain signal.

A process of generating the baseband waveform is equivalent to conventional waveform modulation. For example, a data stream may be modulated by using an OFDM waveform used for downlink transmission or a DFT-s-OFDM waveform used for uplink transmission in the LTE system. It should be noted that the waveform herein may be any known waveform, and different waveforms are selected for different modulation. A data stream output through the OTFS encoding may be used for any waveform modulation.

Finally, a modulated waveform is sent out through a radio frequency port after passing through a power amplifier.

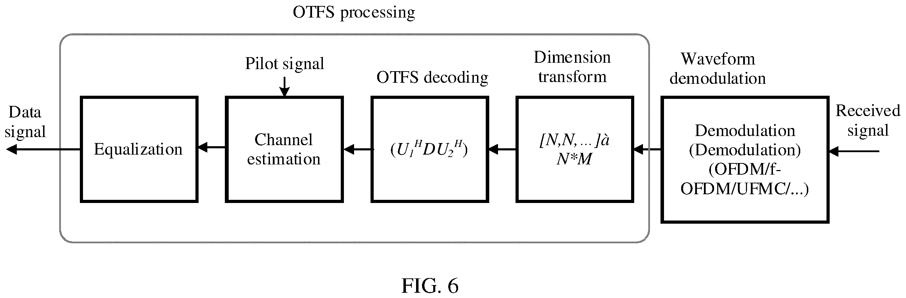

FIG. 6 is a schematic diagram of a processing procedure of an OTFS technology at a signal receive end according to an embodiment of this application. Specifically, at the receive end, a receiver first performs corresponding processing on a waveform used by the transmit end, for example, an OFDM/DFT-s-OFDM waveform. It should be noted that the receive end needs to process $M$ consecutive receiving symbols. Then, dimension transform is performed on $M$ processed receiving symbols, to generate a two-dimensional equivalent signal whose size is $N*M$. Then, OTFS decoding is performed, and the ongoing processing is inverse transform of processing performed by the transmit end. For example, a conjugate matrix of an orthogonal base matrix $U_1$ is left multiplied, and a conjugate matrix of an orthogonal base matrix $U_2$ is right multiplied, to obtain a two-dimensional received signal that is in delay domain-Doppler domain and whose size is $N*M$. Next, channel estimation is performed on an equivalent channel in delay domain-Doppler domain in a pilot placement manner agreed on by the transmit end and the receive end and based on a pilot signal. Finally, a channel estimation result is used to equalize and demodulate a data signal in delay domain-Doppler domain to recover data information of the transmit end.

(5) Phase noise (phase noise, PN)

Phase noise (or referred to as PN for short) refers to a random change of a phase of an output signal of a communication device caused by various noises of a communication device (for example, various radio frequency components) that sends a signal. To satisfy increasing communication requirements, frequency band resources of high frequency bands (frequency bands above 6 G, mainly including 28 G, 39 G, 60 G, and 73 G) are increasingly used in communication systems to transmit signals. The high frequency band can provide a large bandwidth and a highly integrated antenna array for communication to achieve a high throughput. However, a phase noise problem of a high frequency band is very prominent. As the frequency band increases, a higher phase noise power spectrum density indicates greater impact on a received signal. When a frequency band for sending the signal is high, deterioration of a phase noise causes poor demodulation performance of the signal and deteriorates communication quality. To estimate and compensate for a phase noise of a signal, a phase-tracking reference signal (phase-tracking reference signal, PTRS) is introduced in this field.

For example, impact of the phase noise may be shown by formula 1-1:

$$y(n) = x(n)e^{j\theta_n} \quad \text{formula 1-1}$$

n=0, 1, ..., or N-1, and is a time-domain sampling point. Simply speaking, the phase noise is a random phase value generated at each sampling point n. A basic principle of phase noise estimation by using the PTRS is as follows: A known PTRS (that is, known $x(n)$ ) is placed at the transmit end, a received PTRS (that is, known $y(n)$ ) is read at the receive end, and a phase noise value (that is, a value $\theta$) may be calculated based on x(n) and $y(n)$.

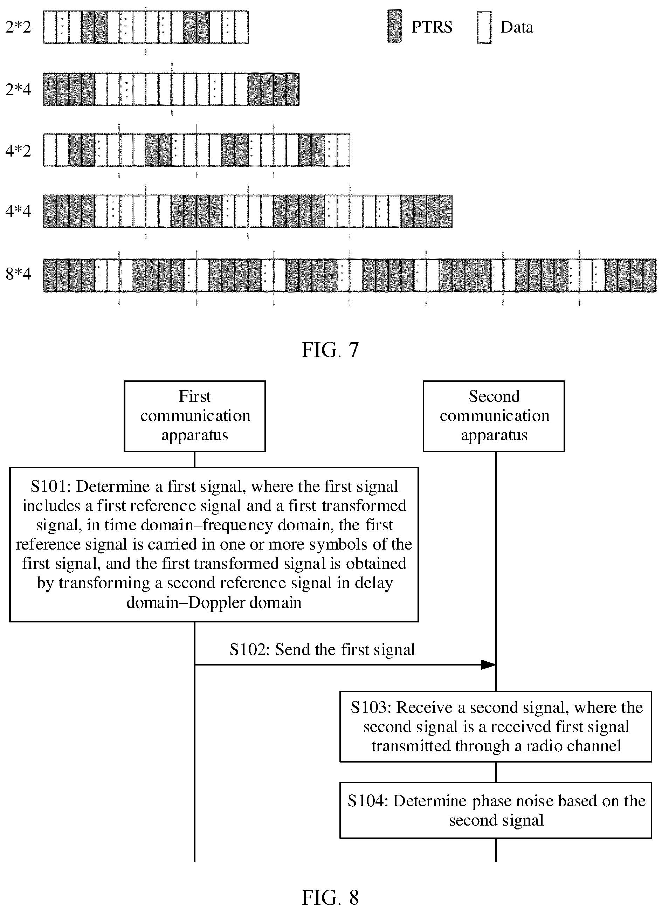

For a 5G high-frequency scenario, a phase-tracking reference signal (phase-tracking reference signal, PTRS) is introduced to an OFDM waveform in an existing protocol for phase noise tracking and estimation. For example, a DFT-s-OFDM signal is used as an example. One DFT-s-OFDM signal includes a phase-tracking reference signal block (Block-PTRS) (for example, may be one or more Block-PTRSs), and the Block-PTRS includes a PTRS and a data signal. FIG. 7 is a schematic diagram of Block-PTRSs of some DFT-s-OFDM signals according to an embodiment of this application. In FIG. 7, each grid represents a sampling point (or referred to as a quadrature amplitude modulation (quadrature amplitude modulation, QAM) symbol or a pi/2 binary phase shift keying (binary phase shift keying, BPSK) symbol or a quadrature phase shift keying (quadrature phase shift keying, QPSK) symbol). Parameters (for example, 2*2, 2*4, 4*2, 4*4, and 8*4) of patterns of the Block-PTRSs are used to indicate a number P of PTRS groups in one DFT-s-OFDM signal and a number Q of sampling points in the group, that is, a total number of PTRSs is P*Q. It should be noted that a specific mapping location of the PTRS is related to the two parameters and a scheduling bandwidth. In addition, the mapping location of the signal may be understood as a signal sending sequence in time domain. Mapping locations of the two signals in the Block-PTRS are adjacent. It may be considered that sending time of the two signals are adjacent in time domain.

When the number Q of sampling points in the group is equal to 2, the scheduling bandwidth is evenly divided into P segments or P intervals, and one PTRS group is mapped in the middle of each segment, as shown in a 1st row (corresponding to a case in which P=2) and a 3rd row (corresponding to a case in which P=4) in FIG. 7. When the number Q of sampling points in the group is equal to 4, the scheduling bandwidth is evenly divided into P segments or P intervals, and then one PTRS group is mapped to each segment or each interval. A PTRS group of a 1st segment is mapped to the header of the 1st segment, a PTRS group of a Pth segment is mapped to the tail of the Pth segment, and a PTRS group of another segment (or referred to as an interval) is mapped to the middle, as shown in a 2nd row (corresponding to a case in which P=2, where because there are only two segments in this case, there is no PTRS group mapped to the middle of the segment), a 4th row (corresponding to a case in which P=4), and a 5th row (corresponding to a case in which P=8) in FIG. 7.

In a transmission process, the foregoing two parameters are implicitly determined by a current scheduling bandwidth $N_{RB}$ based on a preconfigured mapping relationship (a correspondence between the scheduling bandwidth and the parameter, as shown in Table 1, where $N_{RB0}$ to $N_{RB4}$ are preconfigured values).

Table 1

| Scheduled bandwidth (Scheduled bandwidth) | Number of PTRS groups (Number of PTRS groups) | Number of sampling points in a PTRS group (Number of samples per PTRS group) |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

An existing phase noise pilot solution is based on a conventional DFT-s-OFDM waveform or an OFDM waveform. For a waveform of orthogonal time-frequency transform, there is no solution design for how to process phase noise.

Based on this, solutions in embodiments of this application are provided. In embodiments of this application, for an OTFS waveform (a waveform based on the delay domain-Doppler domain), a phase noise tracking solution is designed, so that a receive end can process phase noise in the waveform.

The following describes a phase noise processing method provided in embodiments of this application based on the network architecture, the terminal device, and the network device that are described in the foregoing content. FIG. 8 is a flowchart of a communication method according to an embodiment of this application. The method may be implemented based on the network architecture shown in FIG. 1. In an implementation, the first communication apparatus may be the network device in FIG. 1, and the second communication apparatus may be the terminal device in FIG. 1. In another implementation, the first communication apparatus may be the terminal device in FIG. 1, and the second communication apparatus may be the network device in FIG. 1. The method includes the following steps.

S101: The first communication apparatus determines a first signal, where the first signal includes a first reference signal and a first transformed signal.

In time domain-frequency domain, the first reference signal is carried in one or more symbols of the first signal, and the first transformed signal is obtained by transforming a second reference signal in delay domain-Doppler domain.

In a possible implementation, the first communication apparatus may generate the first signal by itself. In still another possible implementation, the first communication apparatus may further generate one part of the first signal, and receive the other part of the first signal from another communication apparatus. For example, the first communication apparatus may receive a data signal sent by the another communication apparatus to the first communication apparatus, and then the first communication apparatus generates the first signal based on the data signal.

The first reference signal and the second reference signal are provided by a signal transmit end (the first communication apparatus) for a signal receive end (the second communication apparatus). Specifically, the first reference signal is used to determine channel information of a channel for transmitting the first signal. For example, the first reference signal may be a demodulation reference signal (demodulation reference signal, DMRS). The second reference signal is used to determine (or referred to as estimate) phase noise in the first signal. For example, the second reference signal may be a phase-tracking reference signal (phase-tracking reference signal, PTRS). It should be noted that, with evolution of communication technologies, the first reference signal and the second reference signal may alternatively be other named reference signals. Possibly, these reference signals may further have some other functions. Naming of the reference signals is not limited in embodiments of this application.

Optionally, the first signal may further include a data signal. The data signal is obtained by transforming a data signal in delay domain-Doppler domain. It may be understood that, in time domain-frequency domain, the first reference signal is carried in the one or more symbols in the first signal, and a signal obtained by transforming the data signal in delay domain-Doppler domain and the second reference signal are carried in some other symbols in the first signal. It may also be expressed as that the first reference signal is placed in frequency domain, and the second reference signal is placed on a Doppler axis or a delay axis.

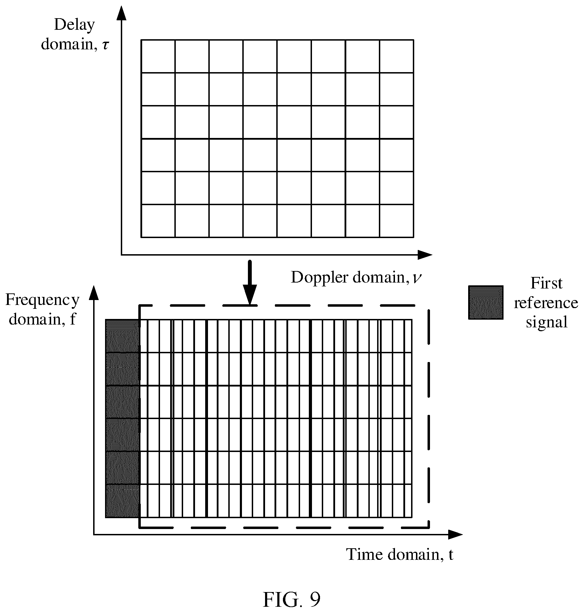

FIG. 9 is a schematic diagram of a first signal according to an embodiment of this application. For a mapping relationship between the delay domain-Doppler domain and the time domain-frequency domain, refer to the description of the embodiment corresponding to FIG. 5. Details are not described herein again. In FIG. 9, the first reference signal is carried in a 1 st symbol in time domain, and signals from a 2nd symbol to a 9th symbol (shown as a pattern included in a dashed box in FIG. 9) are obtained by transforming the data signal in delay domain-Doppler domain and the second reference signal. It should be noted that a location at which the first reference signal is carried is merely an example. Optionally, the first reference signal may alternatively be carried in a plurality of symbols in time domain, for example, carried in the 1 st and the 2nd symbols. In this case, signals carried in the 3 rd symbol to the 9th symbol are obtained by transforming the data signal in delay domain-Doppler domain and the second reference signal. Optionally, the location of the first reference signal may not start from the 1st symbol.

In delay domain-Doppler domain, a first dimension represents the delay domain, and a second dimension represents the Doppler domain. It is assumed that location indexes of the delay domain and the Doppler domain start from 0 and are indexed in a unit of 1 (this is merely an example, another location index design manner may be used, and in another example, the location index may start from 1 and is indexed in a unit of 1). In this case, in FIG. 9, a location index of a signal in a lower left corner of the delay domain-Doppler domain is (0, 0), and a location index of a signal in an upper right corner is (5, 7). In other words, a value set of location indexes of the first signal in delay domain is {0, 1, 2, 3, 4, 5}, and the value set may be understood as a value range of the second reference signal in delay domain. A value set of location indexes of the first signal in Doppler domain is {0, 1, 2, 3, 4, 5, 6, 7}, and the value set may be understood as a value range of the second reference signal in Doppler domain. It should be noted that, in the following content corresponding to FIG. 8, for description of the first signal, refer to the description of this part of content. Details are not described subsequently. It should be noted that the value sets of the location indexes of the first signal in delay domain and Doppler domain are merely examples, and there may be more possible values.

The following further describes a location of the second reference signal in delay domain-Doppler domain. A location index set of the second reference signal in delay domain corresponding to the first signal is A, and a location index set of the second reference signal in Doppler domain corresponding to the first signal is B. The location index set may be understood as a set including location indexes corresponding to a signal, or is referred to as a value set of location indexes.

In a first possible implementation, B = {x: a≤ x ≤ b, x is an integer}, a is a minimum value of location indexes in Doppler domain corresponding to the first signal, and b is a maximum value of the location indexes in Doppler domain corresponding to the first signal. It may be understood that, in delay domain-Doppler domain corresponding to the first signal, the second reference signal is carried in each Doppler symbol. In other words, in the value range [a, b], values of elements in B are consecutive. Alternatively, B is the same as the value set of the location indexes of the first signal in Doppler domain. For example, if a value range of the elements in B is [1, 7], B={1, 2, 3, 4, 5, 6, 7}.

The following describes some possible values of elements in A.

Optionally, values of elements in A may be $N_2$ values existing in every $N_1$ delay grids. $N_1$ and $N_2$ are positive integers, and $N_1$ is greater than $N_2$. For example, $N_1$=3, and $N_2$=1; $N_1$=3, and $N_2$=2; $N_1$=5, and $N_2$=2; and the like.

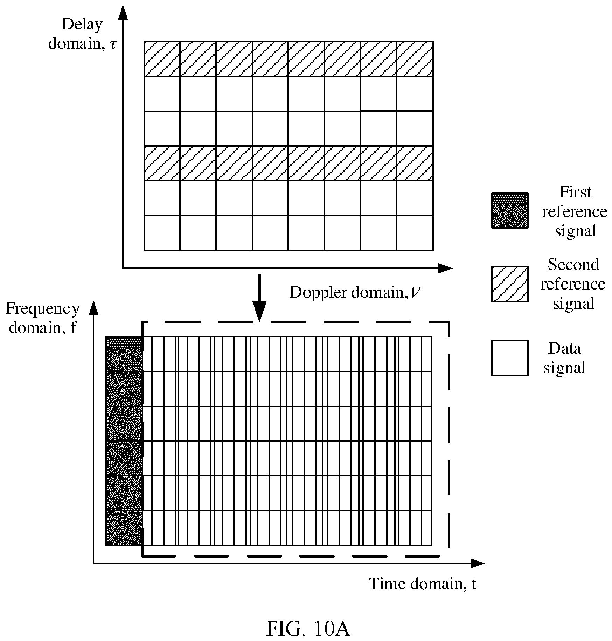

For example, FIG. 10A is a schematic diagram of a pattern of a reference signal according to an embodiment of this application. Optionally, values of elements in A are one value existing in every three delay grids, and A={2, 5}. B = {x: 0≤ x ≤ 7, x is an integer}, that is, B={0, 1, 2, 3, 4, 5, 6, 7}. B is the same as the value set of the location indexes of the first signal in Doppler domain. It should be noted that the value of the location index of the second reference signal in delay domain is merely an example, and there may be another value.

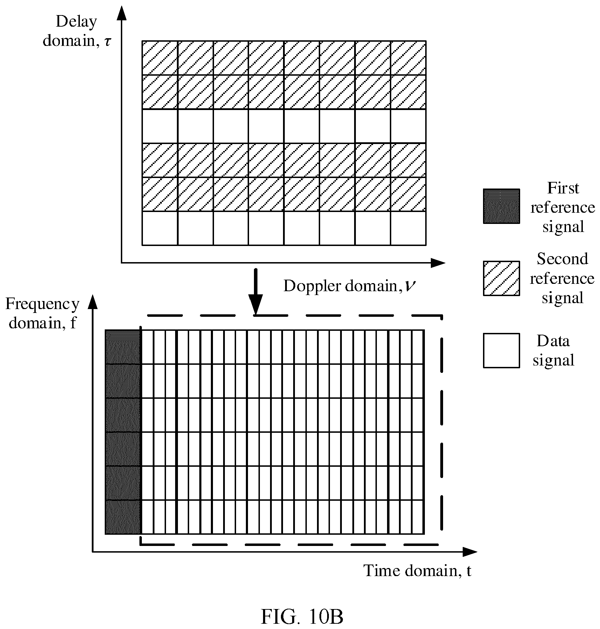

In another example, FIG. 10B is a schematic diagram of a pattern of still another reference signal according to an embodiment of this application. Compared with FIG. 10A, a difference lies in that, optionally, values of elements in A are two values existing in every three delay grids, and A= {1, 2, 4, 5}. For other values, refer to the description in FIG. 10A. Details are not described herein again. It should be noted that the value of the location index of the second reference signal in delay domain is merely an example, and there may be another value. Compared with FIG. 10A, the second reference signal in FIG. 10B occupies more delay domains. In this way, the receive end can obtain more phase noise in time domain through estimation based on a first transformed signal obtained after signal domain transform, thereby improving accuracy of phase noise estimation. Optionally, the elements in A are formed by one or more arithmetic progressions. For example, a value range of the elements in A is [p, q], p is a minimum value of location indexes in delay domain corresponding to the first signal, and q is a maximum value of the location indexes in delay domain corresponding to the first signal. In the value range of [p, q], the values of the elements in A is one or more arithmetic progressions. For example, the value range of the elements in A is [1, 16], and A may be formed by one arithmetic progression {1, 5, 9, 13}, that is, A={1, 5, 9, 13}; or A may be formed by two arithmetic progressions {1, 5, 9, 13} and {2, 6, 10, 14}, that is, A={1, 2, 5, 6, 9, 10, 13, 14}. The value herein is merely an example, and the element in A may have another possible value. Details are not described herein. It should be noted that the values of the elements in A may occupy the entire value range, or may occupy a part of the value range. For example, the value range of the elements in A is [1, 16], and A may be formed by one arithmetic progression {1, 5, 9, 13}, that is, A={1, 5, 9, 13}. In this case, the value occupies the entire value range. In another example, A may also be formed by one arithmetic progression {1, 5, 9}, that is, A={1, 5, 9}. In this case, the value occupies the part of the value range.

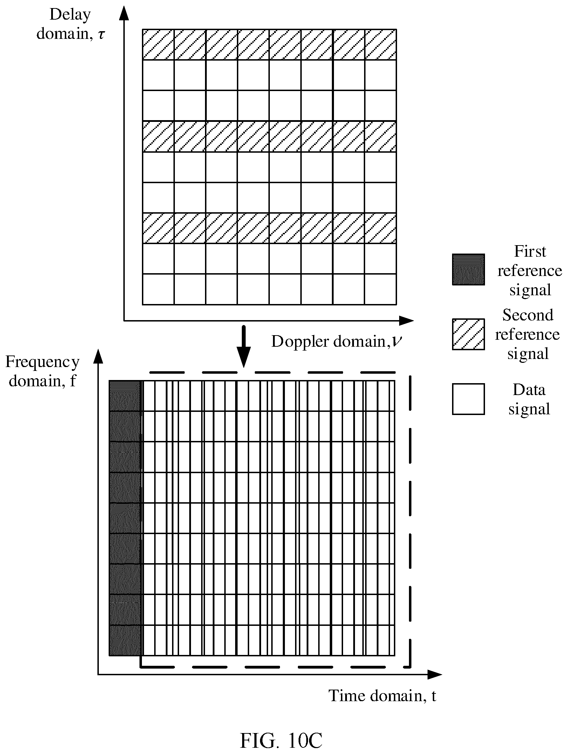

For example, FIG. 10C is a schematic diagram of a pattern of still another reference signal according to an embodiment of this application. A value range of elements in A is {0, 1, 2, 3, 4, 5, 6, 7, 8}, and a value range of elements in B is {0, 1, 2, 3, 4, 5, 6, 7}. Specifically, the elements in A are formed by one arithmetic progression {2, 5, 8}, that is, A={2, 5, 8}. B = {x: a≤ x ≤ b, x is an integer}, where a=0, and b=7, that is, B={0, 1, 2, 3, 4, 5, 6, 7}.

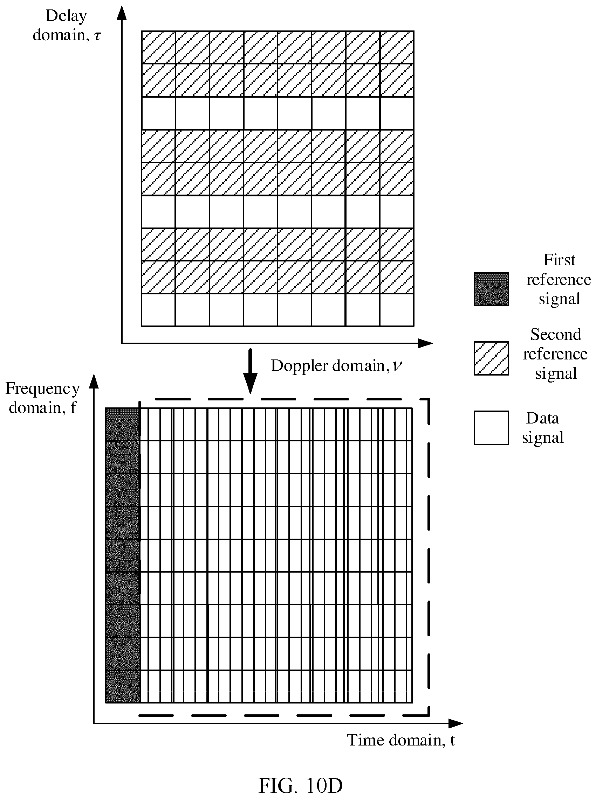

In still another example, FIG. 10D is a schematic diagram of a pattern of still another reference signal according to an embodiment of this application. A value range of elements in A is {0, 1, 2, 3, 4, 5, 6, 7, 8}, and a value range of elements in B is {0, 1, 2, 3, 4, 5, 6, 7}. Specifically, the elements in A are formed by two arithmetic progressions {2, 5, 8} and {1, 4, 7}, that is, A={1, 2, 4, 5, 7, 8}. B = {x: a≤ x ≤ b, x is an integer}, where a=0, and b=7, that is, B={0, 1, 2, 3, 4, 5, 6, 7}. It should be noted that the value of the location index of the second reference signal in delay domain is merely an example, and there may be another value. Compared with FIG. 10C, the second reference signal in FIG. 10D occupies more delay domains. In this way, the receive end can obtain more phase noise in time domain through estimation based on a first transformed signal obtained after signal domain transform, thereby improving accuracy of phase noise estimation. In a second possible implementation, optionally, values of elements in A may be $N_2$ values existing in every $N_1$ delay grids. Values of elements in B may be $M_2$ values existing in every $M_1$ Doppler grids. $N_1$ and $N_2$ are positive integers, and $N_1$ is greater than $N_2$. $M_1$ and $M_2$ are positive integers, and $M_1$ is greater than $M_2$. For example, $N_1$=3, $N_2$=1, $M_1$=2, and $M_2$=1; $N_1$=3, $N_2$=2, $M_1$=3, and $M_2$=1; and the like.

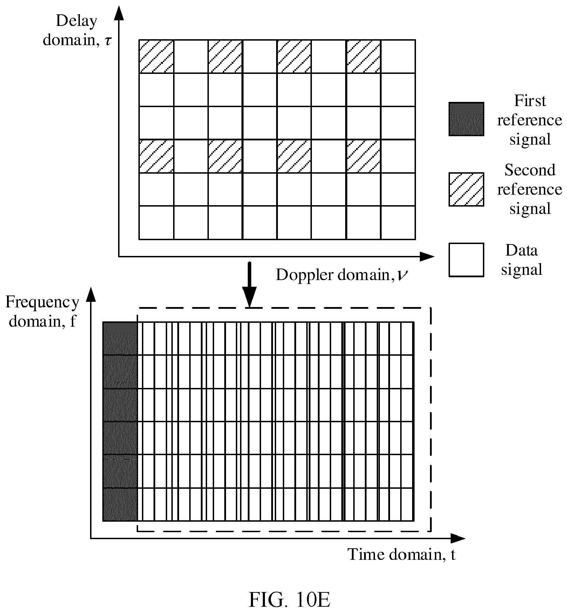

For example, FIG. 10E is a schematic diagram of a pattern of still another reference signal according to an embodiment of this application. Values of elements in A are one value existing in every three delay grids, and A={2, 5}, and values of elements in B are one value existing in every two Doppler grids, and B= {0, 2, 4, 6}. It should be noted that the values of the location indexes of the second reference signal in delay domain and Doppler domain are merely examples, and there may be other values. Compared with FIG. 10A to FIG. 10D, the manner shown in FIG. 10E can carry more data signals, and can improve transmission efficiency of the data signal.

Optionally, the elements in A are formed by one or more arithmetic progressions, and the elements in B are formed by one or more arithmetic progressions. For example, a value range of the elements in A is [p, q], p is a minimum value of location indexes in delay domain corresponding to the first signal, and q is a maximum value of the location indexes in delay domain corresponding to the first signal. In the value range of [p, q], the values of the elements in A is one or more arithmetic progressions. For example, a value range of the elements in B is [a, b], a is a minimum value of location indexes in Doppler domain corresponding to the first signal, and b is a maximum value of the location indexes in Doppler domain corresponding to the first signal. In the value range of [a, b], the values of the elements in B are one or more arithmetic progressions. It should be noted that the values of the elements in A or B may occupy the entire value range, or may occupy a part of the value range.

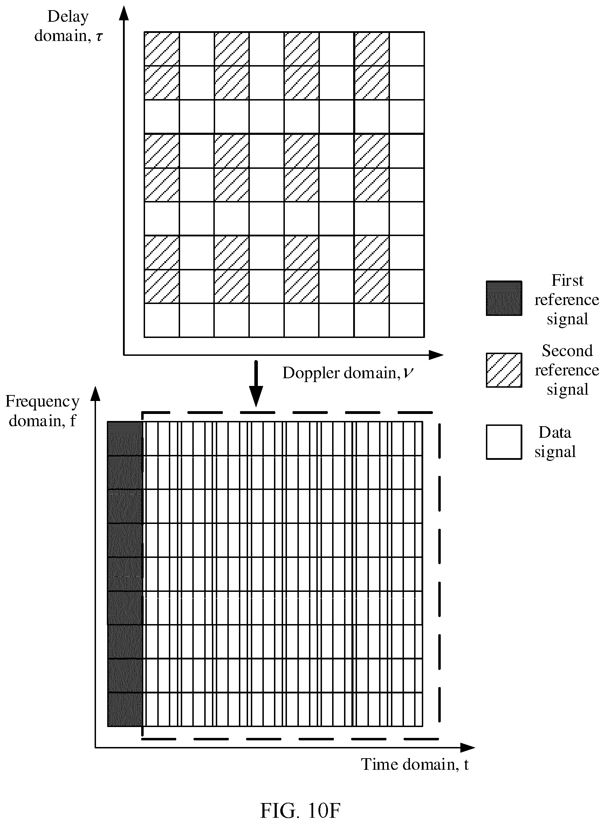

For example, FIG. 10F is a schematic diagram of a pattern of still another reference signal according to an embodiment of this application. A value range of elements in A is {0, 1, 2, 3, 4, 5, 6, 7, 8}, and a value range of elements in B is {0, 1, 2, 3, 4, 5, 6, 7}. Specifically, the elements in A are formed by two arithmetic progressions {2, 5, 8} and {1, 4, 7}, that is, A={1, 2, 4, 5, 7, 8}. The elements in B are formed by one arithmetic progression {0, 2, 4, 6}, that is, B = {0, 2, 4, 6}. It should be noted that the values of the location indexes of the second reference signal in delay domain and Doppler domain are merely examples, and there may be other values. Compared with FIG. 10A to FIG. 10D, the manner shown in FIG. 10F can carry more data signals, and can improve transmission efficiency of the data signal.

In a third possible implementation, to reduce interference (for example, inter-symbol interference (inter-symbol interference ISI (inter-symbol interference, ISI)), inter-channel interference (inter-channel interference, ICI), also referred to as inter-carrier interference, frequency interference, and the like) in the first signal, a guard interval (guard interval, GI) may be further included in delay domain-Doppler domain. Optionally, in some embodiments, a third reference signal is further included in delay domain-Doppler domain, the third reference signal is used to implement a function of the guard interval, and a value of the third reference signal may be 0.

Specifically, in this manner, a location index set of the second reference signal in delay domain corresponding to the first signal is A, a location index set of the second reference signal in Doppler domain corresponding to the first signal is B, a location index set of the third reference signal in delay domain corresponding to the first signal is C, and a location index set of the third reference signal in Doppler domain corresponding to the first signal is D.

Optionally, B={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, B={k, k+1}, where $a \leq k \leq b$- 1. D={x: $a \leq x \leq b$, $x \neq k$, $x \neq k + 1$, x is an integer}. It may be understood that in delay domain-Doppler domain corresponding to the first signal, the second reference signal is carried in one or two consecutive Doppler symbols, and the third reference signal is further carried in another Doppler symbol. In some other possible implementations, the second reference signal may be carried in a plurality of (three or more) consecutive Doppler symbols, and the third reference signal may be carried in another Doppler symbol. It may also be referred to as that a union set of the location index set of the third reference signal in Doppler domain and the location index set of the second reference signal in Doppler domain is empty, and the two location index sets jointly form the location index set of the first signal in Doppler domain. The following describes some possible values of elements in A and C. Optionally, A is equal to C. Optionally, values of elements in A may be $N_2$ values existing in every $N_1$ delay grids. A is equal to C. $N_1$ and $N_2$ are positive integers, and $N_1$ is greater than $N_2$. For example, $N_1$=3, and $N_2$=1; $N_1$=3, and $N_2$=2; $N_1$=5, and $N_2$=2; and the like.

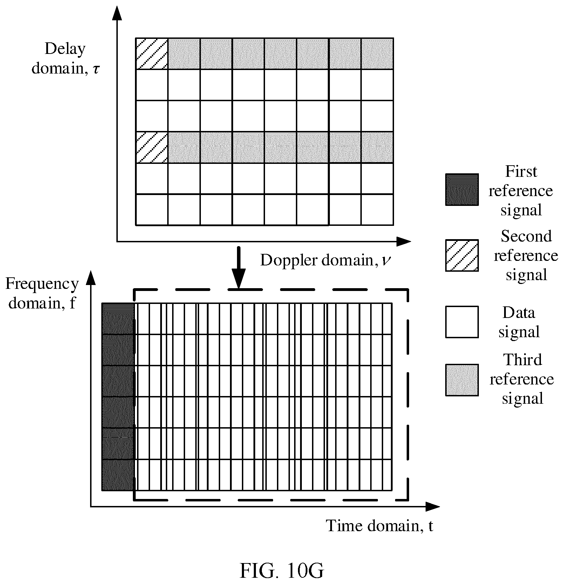

For example, FIG. 10G is a schematic diagram of a pattern of a reference signal according to an embodiment of this application. Values of elements in A are one value existing in every three delay grids. A={2, 5}, and B= {0}. C={2, 5}, and D={1, 2, 3, 4, 5, 6, 7}. It should be noted that the value of the location index of the second reference signal in delay domain is merely an example, and there may be another value.

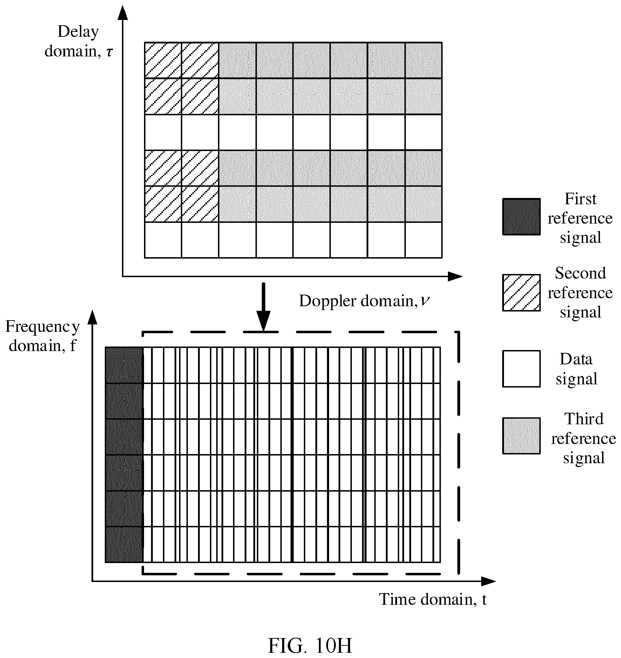

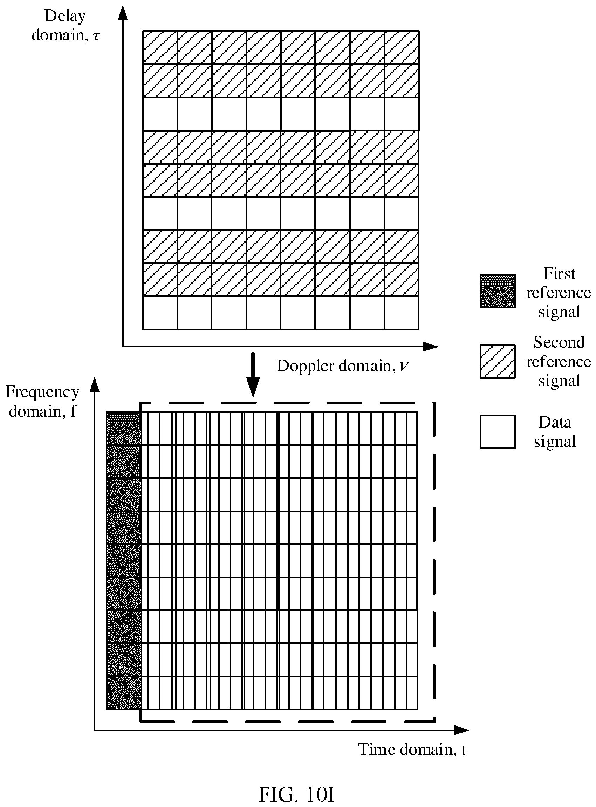

In another example, FIG. 10H is a schematic diagram of a pattern of still another reference signal according to an embodiment of this application. Values of elements in A are two values existing in every three delay grids. A={1, 2, 4, 5}, and B={0, 1}. C={1, 2, 4, 5}, and D={2, 3, 4, 5, 6, 7}. It should be noted that the value of the location index of the second reference signal in delay domain is merely an example, and there may be another value. Compared with FIG. 10G, the second reference signal in FIG. 10H occupies more delay domains. In this way, the receive end can obtain more phase noise in time domain through estimation based on a first transformed signal obtained after signal domain transform, thereby improving accuracy of phase noise estimation. Optionally, the elements in A are formed by one or more arithmetic progressions. A is equal to C. For example, a value range of the elements in A is [p, q], p is a minimum value of location indexes in delay domain corresponding to the first signal, and q is a maximum value of the location indexes in delay domain corresponding to the first signal. In the value range of [p, q], the values of the elements in A is one or more arithmetic progressions. For example, the value range of the elements in A is [1, 16], and A may be formed by one arithmetic progression {1, 5, 9, 13}, that is, A={1, 5, 9, 13}; or A may be formed by two arithmetic progressions {1, 5, 9, 13} and {2, 6, 10, 14}, that is, A={1, 2, 5, 6, 9, 10, 13, 14}. The value herein is merely an example, and the element in A may have another possible value. Details are not described herein. It should be noted that the values of the elements in A may occupy the entire value range, or may occupy a part of the value range. For example, the value range of the elements in A is [1, 16], and A may be formed by one arithmetic progression {1, 5, 9, 13}, that is, A={1, 5, 9, 13}. In this case, the value occupies the entire value range. In another example, A may also be formed by one arithmetic progression {1, 5, 9}, that is, A={1, 5, 9}. In this case, the value occupies the part of the value range. For example, FIG. 10I is a schematic diagram of a pattern of still another reference signal according to an embodiment of this application. A value range of elements in A is {0, 1, 2, 3, 4, 5, 6, 7, 8}, and a value range of elements in B is {0, 1, 2, 3, 4, 5, 6, 7}. Specifically, the elements in A are formed by one arithmetic progression {2, 5, 8}, that is, A={2, 5, 8}, and B={0}. C={2, 5, 8}, and D={1, 2, 3, 4, 5, 6, 7}.

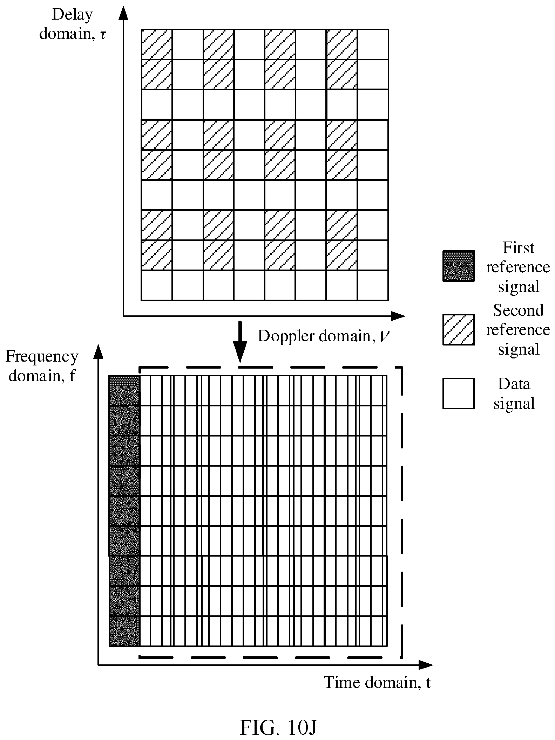

In still another example, FIG. 10J is a schematic diagram of a pattern of still another reference signal according to an embodiment of this application. A value range of elements in A is {0, 1, 2, 3, 4, 5, 6, 7, 8}, and a value range of elements in B is {0, 1, 2, 3, 4, 5, 6, 7}. Specifically, the elements in A are formed by two arithmetic progressions {2, 5, 8} and {1, 4, 7}, that is, A={1, 2, 4, 5, 7, 8}. B = {0, 1}, and D={2, 3, 4, 5, 6, 7}. It should be noted that the value of the location index of the second reference signal in delay domain is merely an example, and there may be another value. Compared with FIG. 10I, the second reference signal in FIG. 10J occupies more delay domains. In this way, the receive end can obtain more phase noise in time domain through estimation based on a first transformed signal obtained after signal domain transform, thereby improving accuracy of phase noise estimation.

In a fourth possible implementation, A={x: $p \leq x \leq q$, x is an integer}, p is a minimum value of location indexes in delay domain corresponding to the first signal, and q is a maximum value of the location indexes in delay domain corresponding to the first signal. It should be understood that in the value range [p, q], values of elements in A are consecutive. Alternatively, A is the same as the value set of the location indexes of the first signal in delay domain. For example, if a value range of the elements in A is [1, 7], A={1, 2, 3, 4, 5, 6, 7}.

The following describes some possible values of elements in B.

Optionally, values of elements in B may be $M_2$ values existing in every $M_1$ Doppler grids. $M_1$ and $M_2$ are positive integers, and $M_1$ is greater than $M_2$. For example, $M_1$=2, and $M_2$=1; $M_1$=3, and $M_2$=1; $M_1$=5, and $M_2$=2; and the like.

Optionally, the elements in B are formed by one or more arithmetic progressions. For example, a value range of the elements in B is [a, b], a is a minimum value of location indexes in Doppler domain corresponding to the first signal, and b is a maximum value of the location indexes in Doppler domain corresponding to the first signal. In the value range of [a, b], the values of the elements in B are one or more arithmetic progressions. For example, the value range of the elements in B is [1, 16], and B may be formed by one arithmetic progression {1, 5, 9, 13}, that is, B={1, 5, 9, 13}; or B may be formed by two arithmetic progressions {1, 5, 9, 13} and {2, 6, 10, 14}, that is, B={1, 2, 5, 6, 9, 10, 13, 14}. The value herein is merely an example, and the element in B may have another possible value. Details are not described herein. It should be noted that the values of the elements in B may occupy the entire value range, or may occupy a part of the value range. For example, the value range of the elements in B is [1, 16], and B may be formed by one arithmetic progression {1, 5, 9, 13}, that is, B={1, 5, 9, 13}. In this case, the value occupies the entire value range. In another example, B may also be formed by one arithmetic progression {1, 5, 9}, that is, B={1, 5, 9}. In this case, the value occupies the part of the value range.

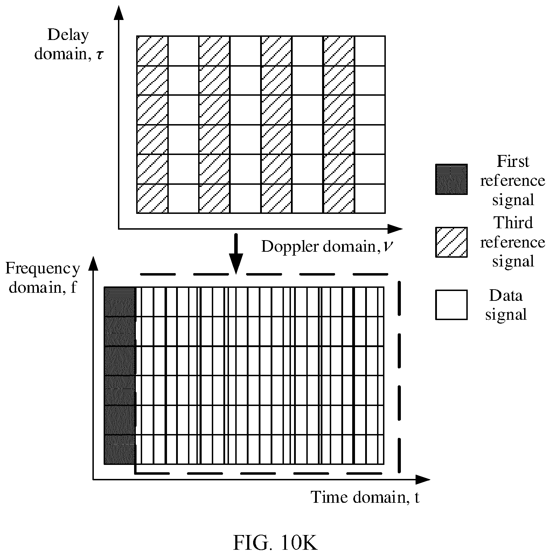

For example, FIG. 10K is a schematic diagram of a pattern of still another reference signal according to an embodiment of this application. A value range of elements in A is {0, 1, 2, 3, 4, 5}, and a value range of elements in B is {0, 1, 2, 3, 4, 5, 6, 7}. Specifically, A={x: $p \leq x \leq q$, x is an integer}, that is, A={0, 1, 2, 3, 4, 5}. B = {0, 2, 4, 6}. It should be noted that the value of the location index of the second reference signal in Doppler domain is merely an example, and there may be another value.

In a fifth possible implementation, to reduce interference (for example, inter-symbol interference, inter-channel interference, and the like) in the first signal, a guard interval may be further included in delay domain-Doppler domain. Optionally, in some embodiments, a third reference signal is further included in delay domain-Doppler domain, the third reference signal is used to implement a function of the guard interval, and a value of the third reference signal may be 0.

Specifically, in this manner, a location index set of the second reference signal in delay domain corresponding to the first signal is A, a location index set of the second reference signal in Doppler domain corresponding to the first signal is B, a location index set of the third reference signal in delay domain corresponding to the first signal is C, and a location index set of the third reference signal in Doppler domain corresponding to the first signal is D.

C={x: $p \leq x \leq q$, x is an integer}. That is, A is equal to C.

B={j}, where $a \leq j \leq b$. D={x: $mod(max(B)- c, b) \leq x \leq mod(max(B) + b, b)$, $x \neq j$, x is an integer}, or D={x: $mod(j- c, b) \leq x \leq mod(j + b, b)$, $x \neq j$, x is an integer}. a is a minimum value of location indexes in Doppler domain corresponding to the first signal, b is a maximum value of the location indexes in Doppler domain corresponding to the first signal, and c is a positive integer. Alternatively, B = {k, k+1}, where $a \leq k \leq b - 1$. D={x: $mod(max(B)-c,b) \leq x \leq mod(max(B) + b, b)$, $x \neq k$, $x \neq k + 1$, x is an integer}. max(B) represents a maximum value of elements in the set B. It may be understood that, in delay domain-Doppler domain corresponding to the first signal, the second reference signal is carried in one or two consecutive Doppler symbols. In some other possible implementations, the second reference signal may be carried in a plurality of (three or more) consecutive Doppler symbols. Because the third reference signal is used to reduce interference in the signal, a location of the third reference signal in Doppler domain may be selected based on the location of the second reference signal, so that interference to the second reference signal is less.

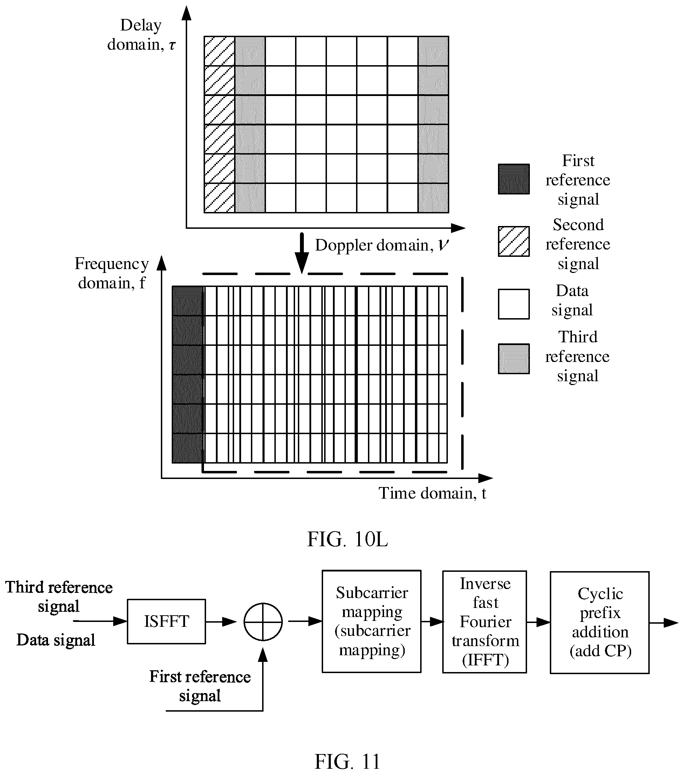

For example, FIG. 10L is a schematic diagram of a pattern of a reference signal according to an embodiment of this application. Optionally, a value range of elements in A is {0, 1, 2, 3, 4, 5}, and a value range of elements in B is {0, 1, 2, 3, 4, 5, 6, 7}. Specifically, A={x: $p \leq x \leq q$, x is an integer}, that is, A={0, 1, 2, 3, 4, 5}. In this case, C={0, 1, 2, 3, 4, 5}. B = {0}. D={x: mod(max(B)- c, b) $\leq$ x $\leq$ mod(max(B) + b, b), D={1, 7}. It should be noted that the value of the location index of the second reference signal in Doppler domain is merely an example, and there may be another value.

S102: The first communication apparatus sends the first signal to the second communication apparatus.

It should be noted that the signal sent by the first communication apparatus to the second communication apparatus is a first signal obtained after a series of processing, for example, a signal obtained after processing such as signal mapping, signal domain transform, subcarrier mapping (subcarrier mapping), inverse fast Fourier transform (IFFT), and cyclic prefix (add CP) addition. After the processing, the first signal is sent to the second communication apparatus through a radio channel in a form of an electromagnetic wave.

For example, FIG. 11 is a schematic flowchart of processing a first signal by a signal transmit end according to an embodiment of this application. An example of the processing procedure of the first signal is as follows:

Step a1: Perform signal mapping. A first reference signal is mapped to a time domain-frequency domain, and a second reference signal and a data signal are mapped to a delay domain-Doppler domain.

Step a2: Perform signal domain transform. For the signal mapped to the delay domain-Doppler domain, transform from the delay domain-Doppler domain into the time domain-frequency domain is performed. In this process, the second reference signal mapped to the delay domain-Doppler domain is transformed into the first transformed signal mapped to the time domain-frequency domain. For example, the transform may be implemented through inverse symplectic finite Fourier transform (Inverse Symplectic Finite Fourier Transform, ISFFT) processing, or optionally may be implemented through another equivalent transform. For example, discrete Fourier transform (DFT) may be performed on a delay axis, and then inverse fast Fourier transform (IFFT) or sequence transform may be performed on a Doppler axis.

Step a3: Subcarrier mapping (subcarrier mapping). An entire signal in time domain-frequency domain is mapped to a preset subcarrier.

Step a4: Inverse fast Fourier transform (IFFT). IFFT processing is performed on a signal obtained after subcarrier mapping, and then a cyclic prefix (add CP) is added to a processed time-domain signal. Optionally, a CP may be added to each symbol, or the CP may be added to the entire signal, to obtain a final time domain waveform. Optionally, the processing manner described above is not limited, and more or less processing may be performed on the first signal. After being processed by the signal transmit end (that is, the first communication apparatus), the first signal is sent to the second communication apparatus through the radio channel in the form of an electromagnetic wave.

S103: The second communication apparatus receives a second signal, where the second signal is a received first signal transmitted through the radio channel.

It should be noted that the second signal received by a receive end (that is, the second communication apparatus) is different from the first signal sent by the transmit end (that is, the first communication apparatus). This is because in an actual transmission process, the first signal is affected by radio channel transmission, phase noise, and the like.

S104: The second communication apparatus determines phase noise based on the second signal. The second communication apparatus needs to perform a series of processing on a signal actually received through an antenna, for example, processing such as cyclic prefix removal (-CP) processing, fast Fourier transform (FFT) processing, subcarrier de-mapping (subcarrier de-mapping) processing, channel equalization (channel equalization) processing (canceling impact of radio channel transmission), and signal domain transform.

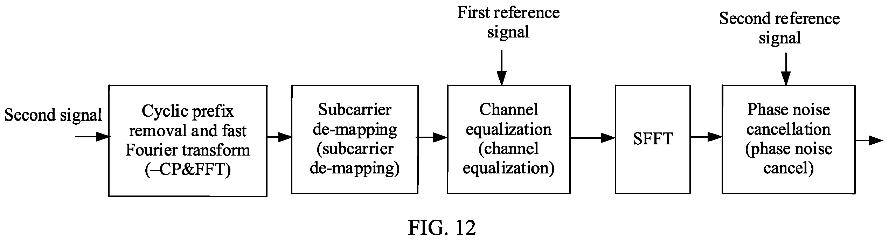

For example, FIG. 12 is a schematic flowchart of processing a second signal by a signal receive end according to an embodiment of this application. An example of the processing procedure of the second signal is as follows:

Step b1: Cyclic prefix (CP) removal and fast Fourier transform. FFT (after CP removal) processing is performed on each symbol in the second signal, to obtain a frequency-domain signal.

Step b2: Subcarrier de-mapping. The entire frequency domain signal is a signal at a corresponding preset subcarrier location. It should be noted that the first communication apparatus and the second communication apparatus pre-agree on location information of a first reference signal in time domain-frequency domain (for the location information, refer to the description in the foregoing content). After subcarrier de-mapping, a value of the first reference signal may be obtained based on the location information of the first reference signal.

Step b3: Channel equalization. Channel information of the frequency domain may be estimated by using the first reference signal, and channel equalization of the frequency domain is performed on all signals based on the channel information, to eliminate impact of radio channel transmission. Step b4: Perform signal domain transform. A signal mapped to the time domain-frequency domain is transformed into a signal mapped to the delay domain-Doppler domain. In this process, a first transformed signal mapped to the time domain-frequency domain is transformed into a second reference signal mapped to the delay domain-Doppler domain. For example, the transform may be implemented through symplectic finite Fourier transform (Symplectic Finite Fourier Transform, SFFT) processing, or may be implemented through another equivalent transform. For example, inverse discrete Fourier transform (IDFT) may be first performed on a delay axis, and then FFT or sequence transform may be performed on a Doppler axis.

It should be noted that the first communication apparatus and the second communication apparatus pre-agree on location information of the second reference signal in delay domain-Doppler domain (for the location information, refer to the description in the foregoing content). After subcarrier de-mapping, a value of the second reference signal may be obtained based on the location information of the second reference signal. Phase noise may be estimated (or referred to as determining or calculating) based on the value of the second reference signal. Further, phase noise between pilots affects interpolation, so that pilot impact on data between the pilots can be eliminated.

For the first to the third possible implementations described in the foregoing content, the signal receive end may estimate the channel information by using the frequency domain, to obtain a signal in delay domain-Doppler domain after channel impact is eliminated, and overheads are low. In delay domain-Doppler domain, the impact of the phase noise may be obtained in Doppler domain, and the impact of the phase noise is estimated through interpolation in delay domain. This implementation has relatively good performance in a large bandwidth scenario. This is because in the large bandwidth scenario, phase noise transform between delay axes is slower than transform in small-bandwidth transform. Therefore, sufficient phase noise information is obtained by using a phase noise pilot on the Doppler axis, and interpolation is performed between delay axes, to obtain better phase noise estimation and compensation performance.

For the fourth and fifth possible implementations described in the foregoing content, the signal receive end may estimate the channel information by using the frequency domain, to obtain a signal in delay domain-Doppler domain after channel impact is eliminated, and overheads are low. In delay domain-Doppler domain, impact of phase noise is obtained in delay domain, and impact of the phase noise is estimated by using the Doppler domain. This implementation has optimal performance in a scenario in which a bandwidth is small or phase noise changes sharply. This is because, in the scenario in which a bandwidth is small or phase noise changes sharply, phase noise transform between delay axes is faster than large-bandwidth transform, and an estimated loss caused by a sharp change of the phase noise is increased through phase noise pilot interpolation of the delay axis. Therefore, a reference signal needs to be placed on each delay axis to estimate phase noise of each delay axis without interpolation.

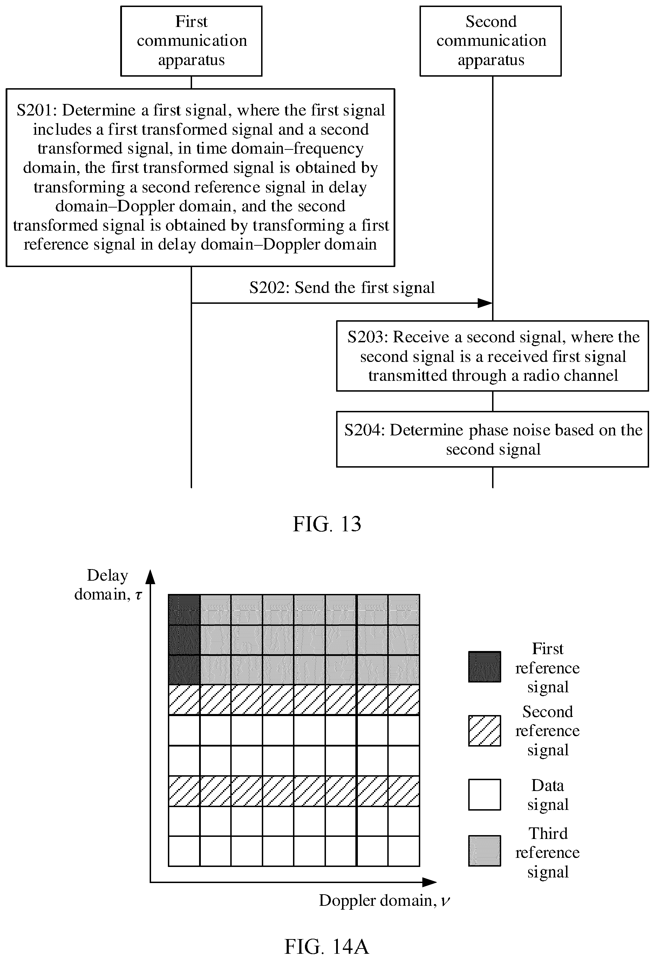

FIG. 13 is a flowchart of a communication method according to an embodiment of this application. The method may be implemented based on the network architecture shown in FIG. 1. In an implementation, the first communication apparatus may be the network device in FIG. 1, and the second communication apparatus may be the terminal device in FIG. 1. In another implementation, the first communication apparatus may be the terminal device in FIG. 1, and the second communication apparatus may be the network device in FIG. 1. The method includes the following steps.

S201: A communication apparatus determines a first signal, where the first signal includes a first transformed signal and a second transformed signal.

In a possible implementation, the first communication apparatus may generate the first signal by itself. In still another possible implementation, the first communication apparatus may further generate one part of the first signal, and receive the other part of the first signal from another communication apparatus. For example, the first communication apparatus may receive a data signal sent by the another communication apparatus to the first communication apparatus, and then the first communication apparatus generates the first signal based on the data signal.

In time domain-frequency domain, the first transformed signal is obtained by transforming a second reference signal in delay domain-Doppler domain, and the second transformed signal is obtained by transforming a first reference signal in delay domain-Doppler domain. Specifically, the first reference signal is used to determine channel information of a channel for transmitting the first signal. For example, the first reference signal may be a DMRS. The second reference signal is used to determine (or referred to as estimate) phase noise in the first signal. For example, the second reference signal may be a PTRS. It should be noted that, with evolution of communication technologies, the first reference signal and the second reference signal may alternatively be other named reference signals. Possibly, these reference signals may further have some other functions. Naming of the reference signals is not limited in embodiments of this application. Optionally, the first signal may further include a data signal. The data signal is obtained by transforming a data signal in delay domain-Doppler domain. For a transform relationship between the signal in delay domain-Doppler domain and the signal in the time domain-frequency domain, refer to the description of the embodiment corresponding to FIG. 5. Details are not described herein again. Optionally, to reduce interference (for example, inter-symbol interference, inter-channel interference, and the like) in the first signal, a guard interval may be further included in delay domain-Doppler domain. Optionally, in some embodiments, a third reference signal is further included in delay domain-Doppler domain, the third reference signal is used to implement a function of the guard interval, and a value of the third reference signal may be 0.

The following further describes locations of the first reference signal, the second reference signal, and the third reference signal in delay domain-Doppler domain. A location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A location index set of the third reference signal in delay domain corresponding to the first signal is C, and a location index set of the third reference signal in Doppler domain corresponding to the first signal is D.

In a first possible implementation, $B = \{x: a \leq x \leq b, x$ is an integer$\}$, a is a minimum value of location indexes in Doppler domain corresponding to the first signal, and b is a maximum value of the location indexes in Doppler domain corresponding to the first signal. It may be understood that, in delay domain-Doppler domain corresponding to the first signal, the second reference signal is carried in each Doppler symbol. In other words, in the value range [a, b], values of elements in B are consecutive. Alternatively, B is the same as the value set of the location indexes of the first signal in Doppler domain. For example, if a value range of the elements in B is [1, 7], B={1, 2, 3, 4, 5, 6, 7}.

$F=\{j\}$, where $a \leq j \leq b$. $D=\{x: a \leq x \leq b, x \neq j, x$ is an integer$\}$. Alternatively, $F=\{k, k+1\}$, where $a \leq k \leq b- 1$. $D=\{x: a \leq x \leq b, x \neq k, x \neq k + 1, x$ is an integer$\}$. It may be understood that in delay domain-Doppler domain corresponding to the first signal, the first reference signal is carried in one or two consecutive Doppler symbols, and the third reference signal is carried in another Doppler symbol. In some other possible implementations, the first reference signal may be carried in a plurality of (three or more) consecutive Doppler symbols, and the third reference signal may be carried in another Doppler symbol. It may also be referred to as that a union set of the location index set of the third reference signal in Doppler domain and the location index set of the first reference signal in Doppler domain is empty, and the two location index sets jointly form the location index set of the first signal in Doppler domain.

The following describes some possible values of elements in A, C, and E. Optionally, C is equal to E.

Optionally, a value range of elements in A is [p, k], and the values of the elements in A may be $N_2$ values existing in every $N_1$ delay grids. $N_1$ and $N_2$ are positive integers, and $N_1$ is greater than $N_2$. For example, $N_1=3$, and $N_2=1$; $N_1=3$, and $N_2=2$; $N_1=5$, and $N_2=2$; and the like. $p < k < q$ p is a minimum value of location indexes in delay domain corresponding to the first signal, and q is a maximum value of the location indexes in delay domain corresponding to the first signal. $E=\{x: k + 1 \leq x \leq q, x$ is an integer$\}$, and $C=\{x: k + 1 \leq x \leq q, x$ is an integer$\}$.

For example, FIG. 14A is a schematic diagram of still another reference signal according to an embodiment of this application. As shown in FIG. 14A, in delay domain-Doppler domain, a first dimension represents the delay domain, and a second dimension represents the Doppler domain. It is assumed that location indexes of the delay domain and the Doppler domain start from 0 and are indexed in a unit of 1 (this is merely an example, another location index design manner may be used). In this case, in FIG. 14A, a location index of a signal in a lower left corner of the delay domain-Doppler domain is (0, 0), and a location index of a signal in an upper right corner is (8, 7). In other words, a location index set in delay domain corresponding to the first signal is {0, 1, 2, 3, 4, 5, 6, 7, 8}, and a location index set in Doppler domain corresponding to the first signal is {0, 1, 2, 3, 4, 5, 6, 7}. It should be noted that, for delay domain-Doppler domains in subsequent figures, refer to the description herein. Details are not described in subsequent content.

In FIG. 14A, p is a minimum value of location indexes in delay domain corresponding to the first signal, and p=0; q is a maximum value of location indexes in delay domain corresponding to the first signal, and q=8; and k=5. Values of elements in A are one value existing in every three delay grids. A={2, 5}, and B={0, 1, 2, 3, 4, 5, 6, 7}. $C=\{x: k + 1 \leq x \leq q, x$ is an integer$\}$, that is, C={6, 7, 8}, and D={1, 2, 3, 4, 5, 6, 7}. $E=\{x: k + 1 \leq x \leq q, x$ is an integer$\}$, that is, E={6, 7, 8}, and F= {0}. It should be noted that the value of the location index of the second reference signal in delay domain is merely an example, and there may be another value.

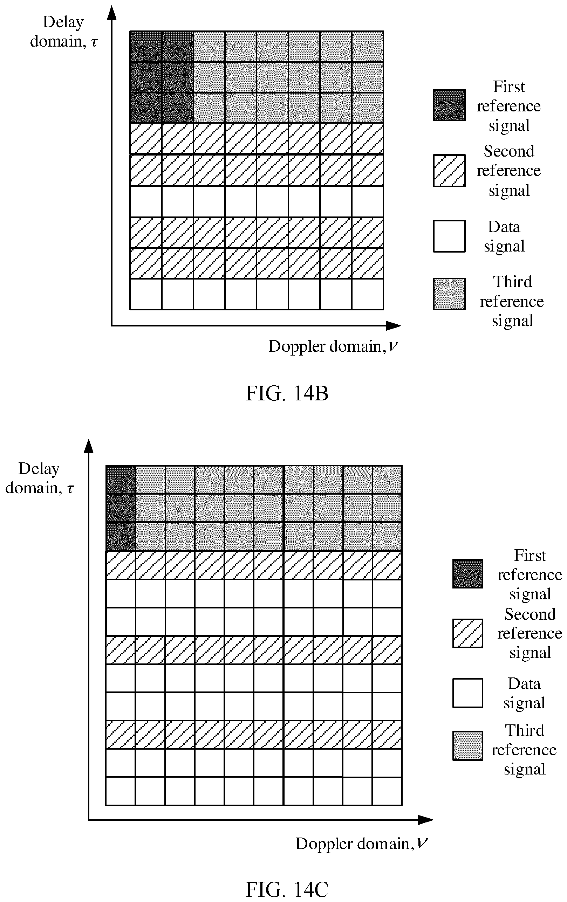

In another example, FIG. 14B is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=8; and k=5. Values of elements in A are two values existing in every three delay grids. A={1, 2, 4, 5}, and B= {0, 1, 2, 3, 4, 5, 6, 7}. C={6, 7, 8}, and D={2, 3, 4, 5, 6, 7}. E={6, 7, 8}, and F={0, 1}. It should be noted that the value of the location index of the second reference signal in delay domain is merely an example, and there may be another value. Compared with FIG. 14A, the second reference signal in FIG. 14B occupies more delay domains. In this way, the receive end can obtain more phase noise in time domain through estimation based on a first transformed signal obtained after signal domain transform, thereby improving accuracy of phase noise estimation.

Optionally, a value range of the elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal. $E=\{x: k + 1 \leq x \leq q, x$ is an integer$\}$, and $C=\{x: k + 1 \leq x \leq q, x$ is an integer$\}$. For example, the value range of the elements in A is [1, 16], and A may be formed by one arithmetic progression {1, 5, 9, 13}, that is, A={1, 5, 9, 13}; or A may be formed by two arithmetic progressions {1, 5, 9, 13} and {2, 6, 10, 14}, that is, A={1, 2, 5, 6, 9, 10, 13, 14}. The value herein is merely an example, and the element in A may have another possible value. Details are not described herein. It should be noted that the values of the elements in A may occupy the entire value range, or may occupy a part of the value range. For example, the value range of the elements in A is [1, 16], and A may be formed by one arithmetic progression {1, 5, 9, 13}, that is, A={1, 5, 9, 13}. In this case, the value occupies the entire value range. In another example, A may also be formed by one arithmetic progression {1, 5, 9}, that is, A={1, 5, 9}. In this case, the value occupies the part of the value range.

For example, FIG. 14C is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=11; and k=8. A value range of elements in A is {0, 1, 2, 3, 4, 5, 6, 7, 8}, and a value range of elements in B is {0, 1, 2, 3, 4, 5, 6, 7, 8, 9}. Specifically, the elements in A are formed by one arithmetic progression {2, 5, 8}, that is, A={2, 5, 8}. B = {x: a ≤ x ≤ b, x is an integer}, where a=0, and b=9, that is, B={0, 1, 2, 3, 4, 5, 6, 7, 8, 9}. E={x: k + 1 ≤ x ≤ q, x is an integer}, that is, E={9, 10, 11}, and F= {0}. C={x: k + 1 ≤ x ≤ q, x is an integer}, that is, C={9, 10, 11}. D={x: a ≤ x ≤ b, x ≠ j, x is an integer}, where j=0, that is, D={1, 2, 3, 4, 5, 6, 7, 8, 9}.

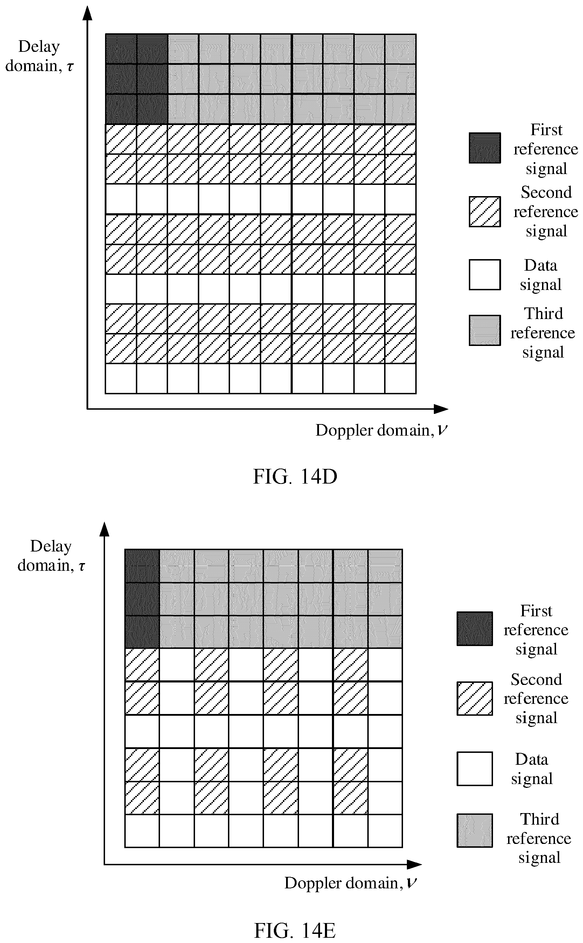

In still another example, FIG. 14D is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=11; and k=8. A value range of elements in A is {0, 1, 2, 3, 4, 5, 6, 7, 8}, and a value range of elements in B is {0, 1, 2, 3, 4, 5, 6, 7, 8, 9}. Specifically, the elements in A are formed by two arithmetic progressions {2, 5, 8} and {1, 4, 7}, that is, A={1, 2, 4, 5, 7, 8}. B = {x: a ≤ x ≤ b, x is an integer}, where a=0, and b=9, that is, B={0, 1, 2, 3, 4, 5, 6, 7, 8, 9}. E={x: k + 1 ≤ x ≤ q, x is an integer}, that is, E={9, 10, 11}, and F={0,1}. C={x: k + 1 ≤ x ≤ q, x is an integer}, that is, C={9, 10, 11}. D={x: a ≤ x ≤ b, x ≠ k, x ≠ k + 1, x is an integer}, where k=0, k+1=1, that is, D={2, 3, 4, 5, 6, 7, 8, 9}. It should be noted that the value of the location index of the second reference signal in delay domain is merely an example, and there may be another value. Compared with FIG. 14C, the second reference signal in FIG. 14D occupies more delay domains. In this way, the receive end can obtain more phase noise in time domain through estimation based on a first transformed signal obtained after signal domain transform, thereby improving accuracy of phase noise estimation.

In a second possible implementation, optionally, a value range of elements in A is [p, k], and values of the elements in A may be $N_2$ values existing in every $N_1$ delay grids. p < k < q p is a minimum value of location indexes in delay domain corresponding to the first signal, and q is a maximum value of the location indexes in delay domain corresponding to the first signal. Values of elements in B may be $M_2$ values existing in every $M_1$ Doppler grids. $N_1$ and $N_2$ are positive integers, and $N_1$ is greater than $N_2$. $M_1$ and $M_2$ are positive integers, and $M_1$ is greater than $M_2$. For example, $N_1$=3, $N_2$=1, $M_1$=2, and $M_2$=1; $N_1$=3, $N_2$=2, $M_1$=3, and $M_2$=1; and the like. E={x: k + 1 ≤ x ≤ q, x is an integer}, and C={x: k + 1 ≤ x ≤ q, x is an integer}.

For example, FIG. 14E is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=8; and k=5. Values of elements in A are two values existing in every three delay grids, and A={1, 2, 4, 5}, and values of elements in B are one value existing in every two Doppler grids, and B={0, 2, 4, 6}. E={x: k + 1 ≤ x ≤ q, x is an integer}, that is, E={9, 10, 11}, and F= {0}. C={x: k + 1 ≤ x ≤ q, x is an integer}, that is, C={6, 7, 8}. D={x: a ≤ x ≤ b, x=A j, x is an integer}, where j=0, that is, D={1, 2, 3, 4, 5, 6, 7}. It should be noted that the values of the location indexes of the second reference signal in delay domain and Doppler domain are merely examples, and there may be other values. Compared with FIG. 14A and FIG. 14B, the manner shown in FIG. 14E can carry more data signals, and can improve transmission efficiency of the data signal.

Optionally, a value range of elements in A is [p, k], the elements in A are formed by one or more arithmetic progressions, p < k < q, p is a minimum value of location indexes in delay domain corresponding to the first signal, and q is a maximum value of the location indexes in delay domain corresponding to the first signal. A value range of elements in B is [a, b], and the elements in B are formed by one or more arithmetic progressions. a is a minimum value of location indexes in Doppler domain corresponding to the first signal, and b is a maximum value of the location indexes in Doppler domain corresponding to the first signal. It should be noted that the values of the elements in A or B may occupy the entire value range, or may occupy a part of the value range. F={j}, where a ≤ j ≤ b. D={x: a ≤ x ≤ b, x ≠ j, x is an integer}. Alternatively, F = {k, k+1}, where a ≤ k ≤ b- 1. D={x: a ≤ x ≤ b, x ≠ k, x ≠ k + 1, x is an integer}. E={x: k + 1 ≤ x ≤ q, x is an integer}, and C={x: k + 1 ≤ x ≤ q, x is an integer}.

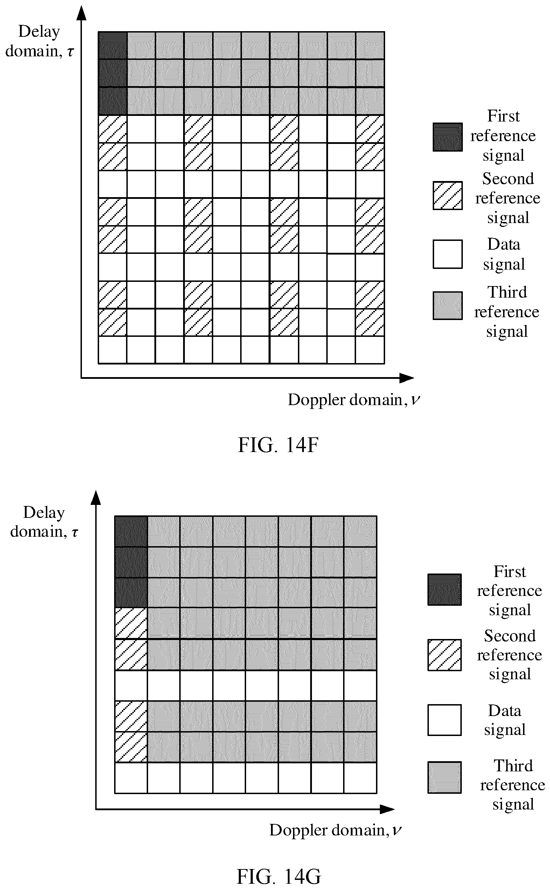

For example, FIG. 14F is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=11; and k=8. a is a minimum value of location indexes in Doppler domain corresponding to the first signal, and a=0; and b is a maximum value of the location indexes in Doppler domain corresponding to the first signal, and b=9. A value range of elements in A is {0, 1, 2, 3, 4, 5, 6, 7, 8}, and a value range of elements in B is {0, 1, 2, 3, 4, 5, 6, 7, 8, 9}. Specifically, the elements in A are formed by two arithmetic progressions {2, 5, 8} and {1, 4, 7}, that is, A={1, 2, 4, 5, 7, 8}. B is formed by one arithmetic progression {0, 3, 6, 9}, that is, B={0, 3, 6, 9}. E={x: k + 1 ≤ x ≤ q, x is an integer}, that is, E={9, 10, 11}, and F={0}. C={x: k + 1 ≤ x ≤ q, x is an integer}, that is, C={9, 10, 11}. D={x: a ≤ x ≤ b, x ≠ j, x is an integer}, where j=0, that is, D={1, 2, 3, 4, 5, 6, 7, 8, 9}. It should be noted that the values of the location indexes of the second reference signal in delay domain and Doppler domain are merely examples, and there may be other values. The manner shown in FIG. 14F can carry more data signals, and can improve transmission efficiency of the data signal.

In a third possible implementation, F= {j}, and B={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F={k, k+1}, and B= {k, k+1}, where $a \leq k \leq b$- 1. D={x: $a \leq x \leq b$, $x \neq k$, $x \neq k + 1$, x is an integer}. A value range of elements in A is [p, k], and values of the elements in A may be $N_2$ values existing in every $N_1$ delay grids. $N_1$ and $N_2$ are positive integers, and $N_1$ is greater than $N_2$. For example, $N_1$=3, and $N_2$=1; $N_1$=3, and $N_2$=2; $N_1$=5, and $N_2$=2; and the like. $p < k < q$ p is a minimum value of location indexes in delay domain corresponding to the first signal, and q is a maximum value of the location indexes in delay domain corresponding to the first signal. E={x: $k + 1 \leq x \leq q$, x is an integer}, and C=E U A.

For example, FIG. 14G is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=8; and k=5. Values of elements in A are two values existing in every three delay grids. A={1, 2, 4, 5}, and B={0}. E={x: $k + 1 \leq x \leq q$, x is an integer}, that is, E={9, 10, 11}, and F = {0}. C= E U A, that is, C={1, 2, 4, 5, 6, 7, 8}, and D={x: $a \leq x \leq b$, $x \neq j$, x is an integer}, where j=0, that is, D={1, 2, 3, 4, 5, 6, 7}. It should be noted that the values of the location indexes of the second reference signal in delay domain and Doppler domain are merely examples, and there may be other values.

Optional, F={j}, and B={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F= {k, k+1}, and B= {k, k+1}, where $a \leq k \leq b$- 1. D={x: $a \leq x \leq b$, $x \neq k$, $x \neq k + 1$, x is an integer}. A value range of the elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal. E={x: $k + 1 \leq x \leq q$, x is an integer}, and C=E U A.

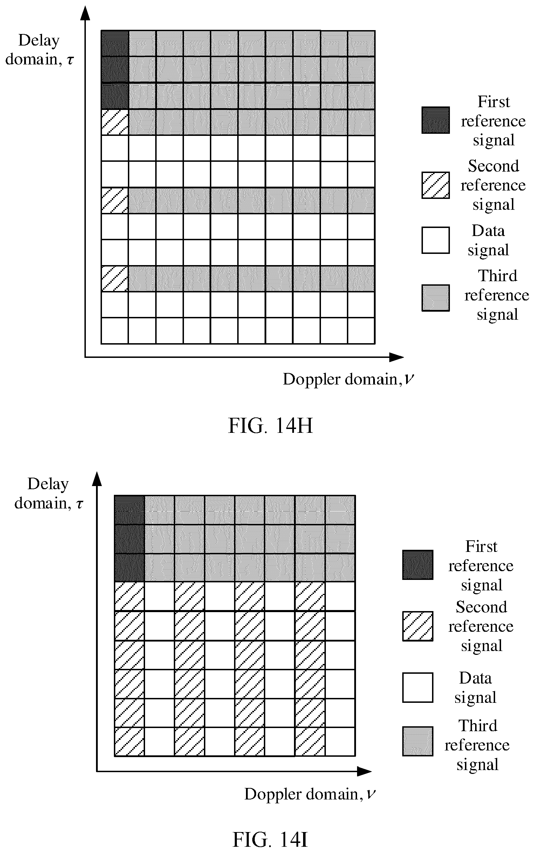

For example, FIG. 14H is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=11; and k=8. a is a minimum value of location indexes in Doppler domain corresponding to the first signal, and a=0; and b is a maximum value of the location indexes in Doppler domain corresponding to the first signal, and b=9. A value range of elements in A is {0, 1, 2, 3, 4, 5, 6, 7, 8}, and a value range of elements in B is {0, 1, 2, 3, 4, 5, 6, 7, 8, 9}. The elements in A are formed by one arithmetic progression {2, 5, 8}, that is, A={2, 5, 8}, and B={0}. E={x: $k + 1 \leq x \leq q$, x is an integer}, that is, E={9, 10, 11}, and F = {0}. C= E U A, that is, C={2, 5, 8, 9, 10, 11}, D={x: $a \leq x \leq b$, $x \neq j$, x is an integer}, where j=0, that is, D={1, 2, 3, 4, 5, 6, 7}. It should be noted that the values of the location indexes of the second reference signal in delay domain and Doppler domain are merely examples, and there may be other values.

In a fourth possible implementation, A={x: $p \leq x \leq k$, x is an integer}, $p < k < q$, p is a minimum value of location indexes in delay domain corresponding to the first signal, and q is a maximum value of the location indexes in delay domain corresponding to the first signal. E={x: $k + 1 \leq x \leq q$, x is an integer}. C=E. F={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F={k, k+1}, where $a \leq k \leq b$- 1. D={x: $a \leq x \leq b$, $x \neq k$, $x \neq k + 1$, x is an integer}.

The following describes some possible values of elements in B.

Optionally, the values of the elements in B may be $M_2$ values existing in every $M_1$ Doppler grids. $M_1$ and $M_2$ are positive integers, and $M_1$ is greater than $M_2$. For example, $M_1$=2, and $M_2$=1; $M_1$=3, and $M_2$=1; $M_1$=5, and $M_2$=2; and the like.

Optionally, a value range of B is [a, b], and the elements in B are formed by one or more arithmetic progressions. For example, the values of the elements in B are one or more arithmetic progressions. For example, the value range of the elements in B is [1, 16], and B may be formed by one arithmetic progression {1, 5, 9, 13}, that is, B={1, 5, 9, 13}; or B may be formed by two arithmetic progressions {1, 5, 9, 13} and {2, 6, 10, 14}, that is, B={1, 2, 5, 6, 9, 10, 13, 14}. The value herein is merely an example, and the element in B may have another possible value. Details are not described herein. It should be noted that the values of the elements in B may occupy the entire value range, or may occupy a part of the value range. For example, the value range of the elements in B is [1, 16], and B may be formed by one arithmetic progression {1, 5, 9, 13}, that is, B={1, 5, 9, 13}. In this case, the value occupies the entire value range. In another example, B may also be formed by one arithmetic progression {1, 5, 9}, that is, B={1, 5, 9}. In this case, the value occupies the part of the value range.

For example, FIG. 14I is a schematic diagram of a pattern of still another reference signal according to an embodiment of this application. p is a minimum value of location indexes in delay domain corresponding to the first signal, and p=0; q is a maximum value of location indexes in delay domain corresponding to the first signal, and q=8; and k=5. a is a minimum value of location indexes in Doppler domain corresponding to the first signal, and a=0; and b is a maximum value of the location indexes in Doppler domain corresponding to the first signal, and b=7. A value range of elements in A is {0, 1, 2, 3, 4, 5}, and a value range of elements in B is {0, 1, 2, 3, 4, 5, 6, 7}. Specifically, A={x: $p \leq x \leq k$, x is an integer}, that is, A={0, 1, 2, 3, 4, 5}. Elements in B are formed by one arithmetic progression {0, 2, 4, 6}, that is, B={0, 2, 4, 6}. E={x: $k + 1 \leq x \leq q$, x is an integer}, that is, E={6, 7, 8}, and F={0}. C=E, that is, C={6, 7, 8}. D={x: $a \leq x \leq b$, $x \neq j$, x is an integer}, where j=0, that is, D={1, 2, 3, 4, 5, 6, 7}. It should be noted that the value of the location index of the second reference signal in Doppler domain is merely an example, and there may be another value.

In a fifth possible implementation, A={x: $p \leq x \leq k$, x is an integer}, $p < k < q$, p is a minimum value of location indexes in delay domain corresponding to the first signal, and q is a maximum value of the location indexes in delay domain corresponding to the first signal. E={x: $k + 1 \leq x \leq q$, x is an integer}. C={x: $p \leq x \leq q$, x is an integer}. F={j}, and B={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F = {k, k+1}, and B = {k, k+1}, where $a \leq k \leq b$- 1. D={x: $a \leq x \leq b$, $x \neq k$, $x \neq k + 1$, x is an integer}. A location index set of the third reference signal in Doppler domain corresponding to the delay domain [p, k] is G. G={x: $mod(max(B) - c, b) \leq x \leq mod(max(B) + b, b)$, $x \neq j$, x is an integer}. Alternatively, G={x: $mod(max(B) - c, b) \leq x \leq mod(max(B) + b, b)$, $x \neq k$, $x \neq k + 1$, x is an integer}, and c is a positive integer.

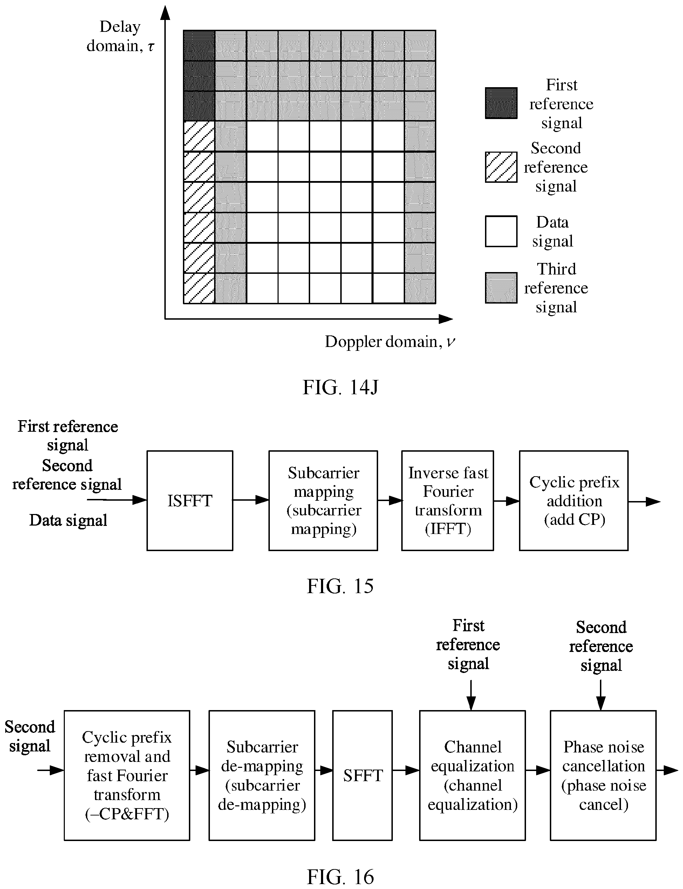

For example, FIG. 14J is a schematic diagram of a pattern of a reference signal according to an embodiment of this application. p is a minimum value of location indexes in delay domain corresponding to the first signal, and p=0; q is a maximum value of location indexes in delay domain corresponding to the first signal, and q=8; and k=5. a is a minimum value of location indexes in Doppler domain corresponding to the first signal, and a=0; and b is a maximum value of the location indexes in Doppler domain corresponding to the first signal, and b=7. A value range of elements in A is {0, 1, 2, 3, 4, 5}, and a value range of elements in B is {0, 1, 2, 3, 4, 5, 6, 7}. Specifically, A={x: $p \leq x \leq q$, x is an integer}, that is, A={0, 1, 2, 3, 4, 5}, and B={0}. E={x: $k + 1 \leq x \leq q$, x is an integer}, that is, E={6, 7, 8}, and F={0}. C={x: $p \leq x \leq q$, x is an integer}, that is, C={0, 1, 2, 3, 4, 5, 6, 7, 8}. D={x: $a \leq x \leq b$, $x \neq j$, x is an integer}, j=0, and D={1, 2, 3, 4, 5, 6, 7}. A location index set of the third reference signal in Doppler domain corresponding to the delay domain [p, k] is G. G={x: $mod(max(B) - c, b) \leq x \leq mod(max(B) + b, b)$, $x \neq j$, and x is an integer}, that is, G= {1, 7}. It should be noted that the value of the location index of the second reference signal in Doppler domain is merely an example, and there may be another value.

S202: The communication apparatus sends the first signal.

It should be noted that the signal sent by the first communication apparatus to the second communication apparatus is a first signal obtained after a series of processing, for example, a signal obtained after processing such as signal mapping, signal domain transform, subcarrier mapping (subcarrier mapping), inverse fast Fourier transform (IFFT), and cyclic prefix (add CP) addition. After the processing, the first signal is sent to the second communication apparatus through a radio channel in a form of an electromagnetic wave.

For example, FIG. 15 is a schematic flowchart of processing a first signal by a signal transmit end according to an embodiment of this application. An example of the processing procedure of the first signal is as follows:

Step c1: Perform signal mapping. A first reference signal, a second reference signal, and a data signal are mapped to a delay domain-Doppler domain.

Step c2: Perform signal domain transform. For the signal mapped to the delay domain-Doppler domain, transform from the delay domain-Doppler domain into the time domain-frequency domain is performed. In this process, the first reference signal mapped to the delay domain-Doppler domain is transformed into the second transformed signal mapped to the time domain-frequency domain, and the second reference signal mapped to the delay domain-Doppler domain is transformed into the first transformed signal mapped to the time domain-frequency domain. For example, the transform may be implemented through ISFFT processing, or optionally, may be implemented through another equivalent transform. For example, discrete Fourier transform (DFT) may be performed on a delay axis, and then inverse fast Fourier transform (IFFT) or sequence transform may be performed on a Doppler axis.

Step c3: Subcarrier mapping (subcarrier mapping). An entire signal in time domain-frequency domain is mapped to a preset subcarrier.

Step c4: Inverse fast Fourier transform (IFFT). IFFT processing is performed on a signal obtained after subcarrier mapping, and then a cyclic prefix (add CP) is added to a processed time-domain signal. Optionally, a CP may be added to each symbol, or the CP may be added to the entire signal, to obtain a final time domain waveform. Optionally, the processing manner described above is not limited, and more or less processing may be performed on the first signal. After being processed by the signal transmit end (that is, the first communication apparatus), the first signal is sent to the second communication apparatus through the radio channel in the form of an electromagnetic wave.

S203: The second communication apparatus receives a second signal, where the second signal is a received first signal transmitted through the radio channel.

It should be noted that the second signal received by a receive end (that is, the second communication apparatus) is different from the first signal sent by the transmit end (that is, the first communication apparatus). This is because in an actual transmission process, the first signal is affected by radio channel transmission, phase noise, and the like.

S204: The second communication apparatus determines phase noise based on the second signal. The second communication apparatus needs to perform a series of processing on a signal actually received through an antenna, for example, processing such as cyclic prefix removal (-CP) processing, fast Fourier transform (FFT) processing, subcarrier de-mapping (subcarrier de-mapping) processing, channel equalization (channel equalization) processing (canceling impact of radio channel transmission), and signal domain transform.

For example, FIG. 16 is a schematic flowchart of processing a second signal by a signal receive end according to an embodiment of this application. An example of the processing procedure of the second signal is as follows:

Step d1: Cyclic prefix (CP) removal and fast Fourier transform. FFT (after CP removal) processing is performed on each symbol in the second signal, to obtain a frequency-domain signal.

Step d2: Subcarrier de-mapping. The entire frequency domain signal is a signal at a corresponding preset subcarrier location.

Step d3: Perform signal domain transform. A signal mapped to the time domain-frequency domain is transformed into a signal mapped to the delay domain-Doppler domain. In this process, a second transformed signal mapped to the time domain-frequency domain is transformed into a first reference signal mapped to the delay domain-Doppler domain, and a first transformed signal mapped to the time domain-frequency domain is transformed into a second reference signal mapped to the delay domain-Doppler domain. For example, the transform may be implemented through SFFT processing, or may be implemented through another equivalent transform. For example, inverse discrete Fourier transform (IDFT) may be first performed on a delay axis, and then FFT or sequence transform may be performed on a Doppler axis.

Step d4: Channel equalization. Channel information of the delay-Doppler domain may be estimated by using the first reference signal, and channel equalization of the frequency domain is performed on all signals based on the channel information, to eliminate impact of radio channel transmission.

It should be noted that the first communication apparatus and the second communication apparatus pre-agree on location information of the first reference signal and the second reference signal in delay domain-Doppler domain (for the location information, refer to the description in the foregoing content). After subcarrier de-mapping, a value of the first reference signal may be obtained based on the location information of the first reference signal. Channel information of the delay-Doppler domain may be estimated based on the value of the first reference signal.

After the impact of radio channel transmission is eliminated, the second communication apparatus may obtain a value of the second reference signal based on the location information of the second reference signal, and may estimate (or referred to as determining or calculating) phase noise. Further, phase noise between pilots affects interpolation, so that pilot impact on data between the pilots can be eliminated.

For the first, the second, and the third possible implementations described in the foregoing content, a delay-Doppler signal obtained after channel cancellation may be obtained by processing a channel in delay domain-Doppler domain, and performance is good in a high-speed scenario. This is because in the high-speed scenario, the channel changes slowly in delay Doppler domain than in time-frequency domain. Therefore, channel estimation performance is better than processing in time-frequency domain. In delay domain-Doppler domain, the impact of phase noise is obtained on the Doppler axis, and the impact of phase noise is estimated through interpolation on the delay axis. This implementation has optimal performance in a large bandwidth. This is because in the large bandwidth scenario, phase noise transform between delay axes is slower than transform in small-bandwidth transform. Therefore, sufficient phase noise information is obtained by using a phase noise pilot on the Doppler axis, and interpolation is performed between delay axes, to obtain better phase noise estimation and compensation performance.

For the fourth and fifth possible implementations described in the foregoing content, a delay-Doppler signal obtained after channel cancellation may be obtained by processing a channel in delay domain-Doppler domain, and performance is good in a high-speed scenario. This is because in the high-speed scenario, the channel changes slowly in delay Doppler domain than in time-frequency domain. Therefore, channel estimation performance is better than processing in time-frequency domain. In delay domain-Doppler domain, impact of phase noise is obtained in the delay axis, and impact of the phase noise is estimated by using the Doppler axis. This implementation has optimal performance in a scenario in which a bandwidth is small or phase noise changes sharply. This is because, in the scenario in which a bandwidth is small or phase noise changes sharply, phase noise transform between delay axes is faster than large-bandwidth transform, and an estimated loss caused by a sharp change of the phase noise is increased through phase noise pilot interpolation of the delay axis. Therefore, a reference signal needs to be placed on each delay axis to estimate phase noise of each delay axis without interpolation.

To implement functions in the methods provided in embodiments of this application, the first communication apparatus and the second communication apparatus each may include a hardware structure and a software module, and implement the functions in a form of the hardware structure, the software module, or a combination of the hardware structure and the software module. One of the foregoing functions may be performed by using the hardware structure, the software module, or the combination of the hardware structure and the software module.

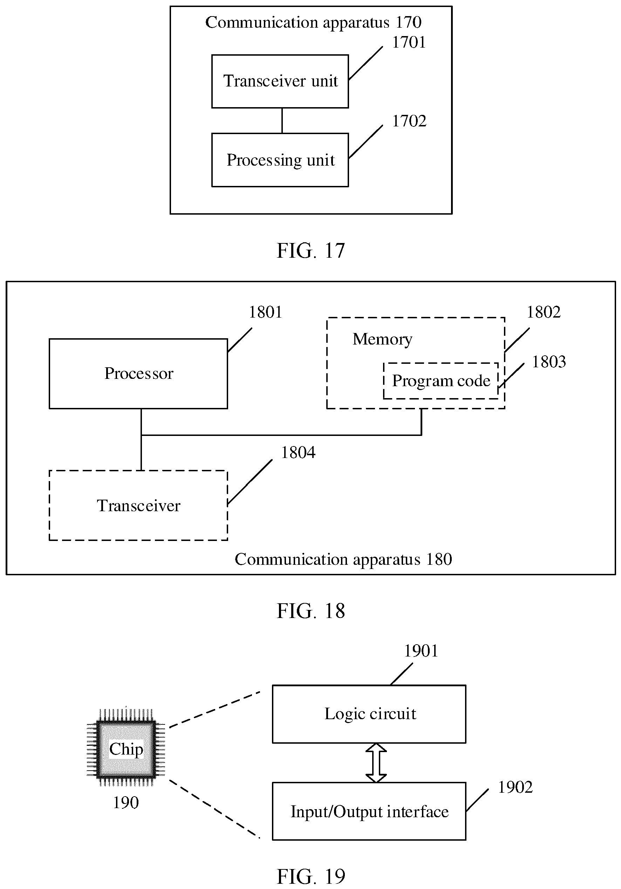

FIG. 17 is a schematic diagram of a structure of a communication apparatus according to an embodiment of this application. The communication apparatus 170 includes a transceiver unit 1701 and a processing unit 1702. The following describes the two units in detail.

In an embodiment, the processing unit 1702 is configured to determine a first signal, where the first signal includes a first reference signal and a first transformed signal, in time domain-frequency domain, the first reference signal is carried in one or more symbols of the first signal, and the first transformed signal is obtained by transforming a second reference signal in delay domain-Doppler domain. Specifically, for an operation performed by the processing unit 1702, refer to the descriptions in step S101 in the method shown in FIG. 8.

The transceiver unit 1701 is configured to send the first signal. Specifically, for an operation performed by the transceiver unit 1701, refer to the descriptions in step S102 in the method shown in FIG. 8.

In some embodiments, the first reference signal is used to determine channel information of a channel for transmitting the first signal. The second reference signal is used to determine phase noise in the channel for transmitting the first signal.

In some embodiments, a location index set of the second reference signal in delay domain corresponding to the first signal is A, and a location index set of the second reference signal in Doppler domain corresponding to the first signal is B. B = {x: $a \leq x \leq b$, x is an integer}. a is a minimum value of location indexes in Doppler domain corresponding to the first signal, and b is a maximum value of the location indexes in Doppler domain corresponding to the first signal.

In some embodiments, elements in A are formed by one or more arithmetic progressions.

In some embodiments, a location index set of the second reference signal in delay domain corresponding to the first signal is A, and a location index set of the second reference signal in Doppler domain corresponding to the first signal is B. Elements in A are formed by one or more arithmetic progressions, and elements in B are formed by one or more arithmetic progressions. In some embodiments, a third reference signal is further included in delay domain-Doppler domain corresponding to the first signal, a location index set of the second reference signal in delay domain corresponding to the first signal is A, a location index set of the second reference signal in Doppler domain corresponding to the first signal is B, a location index set of the third reference signal in delay domain corresponding to the first signal is C, and a location index set of the third reference signal in Doppler domain corresponding to the first signal is D. B = {j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, B = {k, k+1}, where $a \leq k \leq b- 1$. D={x: $a \leq x \leq b$, $x \neq k$, $x \neq k + 1$, x is an integer}.

In some embodiments, elements in A are formed by one or more arithmetic progressions, and A is equal to C. In some embodiments, a location index set of the second reference signal in delay domain corresponding to the first signal is A, and a location index set of the second reference signal in Doppler domain corresponding to the first signal is B. A={x: $p \leq x \leq q$, x is an integer}, p is a minimum value of location indexes in delay domain corresponding to the first signal, and q is a maximum value of the location indexes in delay domain corresponding to the first signal.

In some embodiments, a third reference signal is further included in delay domain-Doppler domain corresponding to the first signal, a location index set of the third reference signal in delay domain corresponding to the first signal is C, and a location index set of the third reference signal in Doppler domain corresponding to the first signal is D. C={x: $p \leq x \leq q$, x is an integer}. B={j}, where $a \leq j \leq b$. D={x: mod(max(B)- c, b) $\leq x \leq$ mod(max(B) + b, b), $x \neq j$, x is an integer}. a is a minimum value of location indexes in Doppler domain corresponding to the first signal, b is a maximum value of the location indexes in Doppler domain corresponding to the first signal, and c is a positive integer. Alternatively, B = {k, k+1}, where $a \leq k \leq b - 1$ . D={x: mod(max(B)- c, b) $\leq x \leq$ mod(max(B) + b, b), $x \neq k$, $x \neq k + 1$, x is an integer}.

In some embodiments, elements in B are formed by one or more arithmetic progressions.

It should be noted that in the foregoing embodiment, the communication apparatus 170 may be a network device, may be a terminal device, may be a chip, a chip system, a processor, or the like that supports the network device in implementing the foregoing method, or may be a chip, a chip system, a processor, or the like that supports the terminal device in implementing the foregoing method.

Specifically, for an operation performed by the communication apparatus 170, refer to related content of the first communication apparatus in the method embodiment corresponding to FIG. 8. Details are not described herein again. The foregoing units may be implemented through hardware, software, or a combination of software and hardware. In an embodiment, the functions of the transceiver unit 1701 and the processing unit 1702 in the foregoing content may be implemented by one or more processors in the communication apparatus 170.

In this embodiment, a first signal sent by the communication apparatus 170 includes a first reference signal and a first transformed signal, in time domain-frequency domain, the first reference signal is carried in one or more symbols of the first signal, and the first transformed signal is obtained by transforming a second reference signal in delay domain-Doppler domain. In this way, a signal receive end can effectively process phase noise based on the received first signal. In another embodiment, the processing unit 1702 is configured to determine a first signal, where the first signal includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain. Specifically, for an operation performed by the processing unit 1702, refer to the descriptions in step S201 in the method shown in FIG. 13.

The transceiver unit 1701 is configured to send the first signal. Specifically, for an operation performed by the transceiver unit 1701, refer to the descriptions in step S202 in the method shown in FIG. 13.

In some embodiments, the first reference signal is used to determine channel information of a channel for transmitting the first signal. The second reference signal is used to determine phase noise in the channel for transmitting the first signal.

In some embodiments, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A third reference signal is further included in delay domain-Doppler domain corresponding to the first signal, a location index set of the third reference signal in delay domain corresponding to the first signal is C, and a location index set of the third reference signal in Doppler domain corresponding to the first signal is D. $B=\{x: a \le x \le b, x$ is an integer$\}$. $F=\{j\}$, where $a \le j \le b$. $D=\{x: a \le x \le b, x \ne j, x$ is an integer$\}$. a is a minimum value of location indexes in Doppler domain corresponding to the first signal, and b is a maximum value of the location indexes in Doppler domain corresponding to the first signal. Alternatively, $F = \{k, k+1\}$, where $a \le k \le b - 1$. $D=\{x: a \le x \le b, x \ne k, x \ne k + 1, x$ is an integer$\}$.

In some embodiments, a value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal. $E=\{x: k + 1 \le x \le q, x$ is an integer$\}$, and $C=\{x: k + 1 \le x \le q, x$ is an integer$\}$.

In some embodiments, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A third reference signal is further included in delay domain-Doppler domain corresponding to the first signal, a location index set of the third reference signal in delay domain corresponding to the first signal is C, and a location index set of the third reference signal in Doppler domain corresponding to the first signal is D. $F=\{j\}$, where $a \le j \le b$. $D=\{x: a \le x \le b, x \ne j, x$ is an integer$\}$. a is a minimum value of location indexes in Doppler domain corresponding to the first signal, and b is a maximum value of the location indexes in Doppler domain corresponding to the first signal. Alternatively, $F = \{k, k+1\}$, where $a \le k \le b - 1$. $D=\{x: a \le x \le b, x \ne k, x \ne k + 1, x$ is an integer$\}$. A value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal. A value range of elements in B is [a, b], and the elements in B are formed by one or more arithmetic progressions. $E=\{x: k + 1 \le x \le q, x$ is an integer$\}$, and $C=\{x: k + 1 \le x \le q, x$ is an integer$\}$.

In some embodiments, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. A third reference signal is further included in delay domain-Doppler domain corresponding to the first signal, a location index set of the third reference signal in delay domain corresponding to the first signal is C, and a location index set of the third reference signal in Doppler domain corresponding to the first signal is D. $F=\{j\}$, and $B=\{j\}$, where $a \le j \le b$. $D=\{x: a \le x \le b, x \ne j, x$ is an integer$\}$. a is a minimum value of location indexes in Doppler domain corresponding to the first signal, and b is a maximum value of the location indexes in Doppler domain corresponding to the first signal. Alternatively, $F= \{k, k+1\}$, and $B=\{k, k+1\}$, where $a \le k \le b - 1$. $D=\{x: a \le x \le b, x \ne k, x \ne k + 1, x$ is an integer$\}$. A value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal. $E=\{x: k + 1 \le x \le q, x$ is an integer$\}$, and $C=E \cup A$.

In some embodiments, a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F. $A=\{x: p \le x \le k, x$ is an integer$\}$, $p < k < q$, p is a minimum value of location indexes in delay domain corresponding to the first signal, and q is a maximum value of the location indexes in delay domain corresponding to the first signal. $E=\{x: k + 1 \le x \le q, x$ is an integer$\}$.

In some embodiments, a third reference signal is further included in delay domain-Doppler domain corresponding to the first signal, a location index set of the third reference signal in delay domain corresponding to the first signal is C, and a location index set of the third reference signal in Doppler domain corresponding to the first signal is D. C=E. F={j}, where $a \leq j \leq b$. D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F = {k, k+1}, where $a \leq k \leq b - 1$; and D={x: $a \leq x \leq b$, $x \neq k$, $x \neq k + 1$, x is an integer}. A value range of B is [a, b], and the elements in B are formed by one or more arithmetic progressions.

In some embodiments, a third reference signal is further included in delay domain-Doppler domain corresponding to the first signal, a location index set of the third reference signal in delay domain corresponding to the first signal is C, and a location index set of the third reference signal in Doppler domain corresponding to the first signal is D. C={x: $p \leq x \leq q$, x is an integer}. F={j}, and B={j}, where $a \leq j \leq b$; D={x: $a \leq x \leq b$, $x \neq j$, x is an integer}. a is a minimum value of location indexes in Doppler domain corresponding to the first signal, and b is a maximum value of the location indexes in Doppler domain corresponding to the first signal. Alternatively, F= {k, k+1}, and B= {k, k+1}, where $a \leq k \leq b - 1$. D={x: $a \leq x \leq b$, $x \neq k$, $x \neq k + 1$, x is an integer}. A location index set in Doppler domain corresponding to a delay domain [p, k] of the third reference signal is G. G={x: $\text{mod}(\text{max}(B) - c,b) \leq x \leq \text{mod}(\text{max}(B) + b,b)$, $x \neq j$, x is an integer}. Alternatively, G={x: $\text{mod}(\text{max}(B) - c, b) \leq x \leq \text{mod}(\text{max}(B) + b, b)$, $x \neq k$, $x \neq k + 1$, x is an integer}, and c is a positive integer.

It should be noted that in the foregoing embodiment, the communication apparatus 170 may be a network device, may be an apparatus in the network device, or may be an apparatus that can be used in matching with the network device. Alternatively, the communication apparatus 170 may be a terminal device, may be an apparatus in a terminal device, or may be an apparatus that can be used in matching with the terminal device.

Specifically, for operations performed by the units of the communication apparatus 170 shown in FIG. 17, refer to related content of the first communication apparatus in the method embodiment corresponding to FIG. 13. Details are not described herein again. The foregoing units may be implemented through hardware, software, or a combination of software and hardware. In an embodiment, the functions of the transceiver unit 1701 and the processing unit 1702 in the foregoing content may be implemented by one or more processors in the communication apparatus 170.

In this embodiment, a first signal sent by the communication apparatus 170 includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain. In this way, a signal receive end can effectively process phase noise based on the received first signal.

FIG. 18 is a schematic diagram of another structure of a communication apparatus according to an embodiment of this application. The communication apparatus 180 may be configured to implement the methods described in the foregoing method embodiments. For details, refer to the description in the foregoing method embodiments.

The communication apparatus 180 may include one or more processors 1801. The processor 1801 may be a general-purpose processor, a dedicated processor, or the like. The processor 1801 may be configured to control a communication apparatus (for example, a network device, a network device chip, a terminal device, or a terminal device chip), execute a software program, and process data of the software program.

Optionally, the communication apparatus 180 may include one or more memories 1802, and the one or more memories 1802 may store program code 1803, and the program code may be run on the processor 1801, so that the communication apparatus 180 performs the method described in the foregoing method embodiment. Optionally, the memory 1802 may further store data. The processor 1801 and the memory 1802 may be separately disposed, or may be integrated with each other. Optionally, the memory 1802 may be further located outside the communication apparatus 180, and is coupled to the communication apparatus 180 in some manners.

Optionally, the communication apparatus 180 may further include a transceiver 1804. The transceiver 1804 may be referred to as a transceiver unit, a transceiver, a transceiver circuit, or the like, and is configured to implement a transceiver function. The transceiver 1804 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a sending function. In an embodiment, the processor 1801 is configured to determine a first signal, where the first signal includes a first reference signal and a first transformed signal, in time domain-frequency domain, the first reference signal is carried in one or more symbols of the first signal, and the first transformed signal is obtained by transforming a second reference signal in delay domain-Doppler domain.

The processor 1801 is further configured to send the first signal by using the transceiver 1804.

It should be noted that in the foregoing embodiment, the communication apparatus 180 may be a network device, may be a terminal device, may be a chip, a chip system, a processor, or the like that supports the network device in implementing the foregoing method, or may be a chip, a chip system, a processor, or the like that supports the terminal device in implementing the foregoing method.

Specifically, for an operation performed by the communication apparatus 180, refer to related content of the first communication apparatus in the method embodiment corresponding to FIG. 8. Details are not described herein again.

In this embodiment, a first signal sent by the communication apparatus 180 includes a first reference signal and a first transformed signal, in time domain-frequency domain, the first reference signal is carried in one or more symbols of the first signal, and the first transformed signal is obtained by transforming a second reference signal in delay domain-Doppler domain. In this way, a signal receive end can effectively process phase noise based on the received first signal. In another embodiment, the processor 1801 is configured to determine a first signal, where the first signal includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain.

The processor 1801 is further configured to send the first signal by using the transceiver 1804.

It should be noted that in the foregoing embodiment, the communication apparatus 180 may be a network device, may be a terminal device, may be a chip, a chip system, a processor, or the like that supports the network device in implementing the foregoing method, or may be a chip, a chip system, a processor, or the like that supports the terminal device in implementing the foregoing method.

Specifically, for an operation performed by the communication apparatus 180, refer to related content of the first communication apparatus in the method embodiment corresponding to FIG. 13. Details are not described herein again.

In this embodiment, a first signal sent by the communication apparatus 180 includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain. In this way, a signal receive end can effectively process phase noise based on the received first signal.

In another possible design, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus 180 may include a circuit. The circuit may implement the sending, receiving, or communication function in the foregoing method embodiments.

The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communication apparatus in the foregoing embodiment may be a network device or a terminal device. However, a scope of the communication apparatus described in this application is not limited thereto, and a structure of the communication apparatus may not be limited by FIG. 8. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a program code;
(3) an ASIC such as a modem (Modem);
(4) a module that can be embedded in another device;
(5) a receiver, an intelligent terminal, a wireless device, a handset, a mobile unit, a vehicle-mounted device, a cloud device, an artificial intelligence device, or the like; or
(6) others.

For a case in which the communication apparatus may be a chip or a chip system, refer to a schematic diagram of a structure of a chip shown in FIG. 19. The chip 190 shown in FIG. 19 includes a logic circuit 1901 and an input/output interface 1902. There may be one or more logic circuits 1901, and there may be a plurality of input/output interfaces 1902.

In some embodiments, the logic circuit 1901 is configured to determine a first signal, where the first signal includes a first reference signal and a first transformed signal, in time domain-frequency domain, the first reference signal is carried in one or more symbols of the first signal, and the first transformed signal is obtained by transforming a second reference signal in delay domain-Doppler domain.

The input/output interface 1902 is configured to output the first signal.

The logic circuit is further configured to process the first signal. For an operation performed by the logic circuit 1901, refer to the description about the first communication apparatus in the embodiment corresponding to FIG. 8.

In some other embodiments, the input/output interface 1902 is configured to determine a first signal, where the first signal includes a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain.

The logic circuit 1901 is configured to send the first signal.

The logic circuit 1901 is further configured to process the first signal. For an operation performed by the logic circuit 1901, refer to the description about the first communication apparatus in the embodiment corresponding to FIG. 13.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application. This application further provides a computer-readable storage medium storing a computer program. When the computer-readable storage medium is executed by a computer, the function in any one of the foregoing method embodiments is implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state drive, SSD)), or the like.

A person of ordinary skill in the art may understand that various numerical numbers such as the first and the second in this specification are merely distinguished for ease of description, and are not intended to limit the scope and sequence of embodiments of this application.

The correspondences shown in the tables in this application may be configured, or may be predefined. Values of the information in the tables are merely examples, and other values may be configured. This is not limited in this application. When a correspondence between the configuration information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**Claims**

1. A communication method, comprising:

   determining, by a communication apparatus, a first signal, wherein the first signal comprises a first reference signal and a first transformed signal, in time domain-frequency domain, the first reference signal is carried in one or more symbols of the first signal, and the first transformed signal is obtained by transforming a second reference signal in delay domain-Doppler domain; and
   sending, by the communication apparatus, the first signal.

2. The method according to claim 1, wherein the first reference signal is used to determine channel information of a channel for transmitting the first signal; and
   the second reference signal is used to determine phase noise in the channel for transmitting the first signal.

3. The method according to claim 1 or 2, wherein a location index set of the second reference signal in delay domain corresponding to the first signal is A, and a location index set of the second reference signal in Doppler domain corresponding to the first signal is B; and
   $B=\{x: a \leq x \leq b, x \text{ is an integer}\}$, a is a minimum value of location indexes in Doppler domain corresponding to the first signal, and b is a maximum value of the location indexes in Doppler domain corresponding to the first signal.

4. The method according to claim 3, wherein elements in A are formed by one or more arithmetic progressions.

5. The method according to claim 1 or 2, wherein a location index set of the second reference signal in delay domain corresponding to the first signal is A, and a location index set of the second reference signal in Doppler domain corresponding to the first signal is B; and
   elements in A are formed by one or more arithmetic progressions, and elements in B are formed by one or more arithmetic progressions.

6. The method according to claim 1 or 2, wherein a third reference signal is further comprised in delay domain-Doppler domain corresponding to the first signal, a location index set of the second reference signal in delay domain corresponding to the first signal is A, a location index set of the second reference signal in Doppler domain corresponding to the first signal is B, a location index set of the third reference signal in delay domain corresponding to the first signal is C, and a location index set of the third reference signal in Doppler domain corresponding to the first signal is D; and

   $B=\{j\}$, wherein $a \leq j \leq b$; $D=\{x: a \leq x \leq b, x \neq j, x \text{ is an integer}\}$; and a is a minimum value of location indexes in Doppler domain corresponding to the first signal, and b is a maximum value of the location indexes in Doppler domain corresponding to the first signal; or
   $B = \{k, k+1\}$, wherein $a \leq k \leq b - 1$; and $D=\{x: a \leq x \leq b, x \neq k, x \neq k + 1, x \text{ is an integer}\}$.

7. The method according to claim 6, wherein elements in A are formed by one or more arithmetic progressions, and A is equal to C.

8. The method according to claim 1 or 2, wherein a location index set of the second reference signal in delay domain corresponding to the first signal is A, and a location index set of the second reference signal in Doppler domain corresponding to the first signal is B; and
   $A=\{x: p \leq x \leq q, x \text{ is an integer}\}$, p is a minimum value of location indexes in delay domain corresponding to the first signal, and q is a maximum value of the location indexes in delay domain corresponding to the first signal.

9. The method according to claim 8, wherein a third reference signal is further comprised in delay domain-Doppler domain corresponding to the first signal, a location index set of the third reference signal in delay domain corresponding to the first signal is C, and a location index set of the third reference signal in Doppler domain corresponding to the first signal is D;

   $C=\{x: p \leq x \leq q, x \text{ is an integer}\}$; and
   $B=\{j\}$, wherein $a \leq j \leq b$; $D=\{x: \text{mod}(\text{max}(B) - c, b) \leq x \leq \text{mod}(\text{max}(B) + b, b), x \neq j, x \text{ is an integer}\}$; and a is a minimum value of location indexes in Doppler domain corresponding to the first signal, b is a maximum value of the location indexes in Doppler domain corresponding to the first signal, and c is a positive integer; or

B = {k, k+1}, wherein $a \leq k \leq b - 1$; and D={x: mod(max(B) - c, b) $\leq$ x $\leq$ mod(max(B) + b, b), $x \neq k$, $x \neq k + 1$, x is an integer}.

10. The method according to claim 8, wherein elements in B are formed by one or more arithmetic progressions.

11. A communication method, comprising:

   determining, by a communication apparatus, a first signal, wherein the first signal comprises a first transformed signal and a second transformed signal, in time domain-frequency domain, the first transformed signal is obtained by transforming a second reference signal in delay domain-Doppler domain, and the second transformed signal is obtained by transforming a first reference signal in delay domain-Doppler domain; and
   sending, by the communication apparatus, the first signal.

12. The method according to claim 11, wherein the first reference signal is used to determine channel information of a channel for transmitting the first signal; and
   the second reference signal is used to determine phase noise in the channel for transmitting the first signal.

13. The method according to claim 11 or 12, wherein a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F;

   a third reference signal is further comprised in delay domain-Doppler domain corresponding to the first signal, a location index set of the third reference signal in delay domain corresponding to the first signal is C, and a location index set of the third reference signal in Doppler domain corresponding to the first signal is D;
   B = {x: $a \leq x \leq b$, x is an integer}; and
   F = {j}, wherein $a \leq j \leq b$; D={x: $a \leq x \leq b$, $x \neq j$, x is an integer}; and a is a minimum value of location indexes in Doppler domain corresponding to the first signal, and b is a maximum value of the location indexes in Doppler domain corresponding to the first signal; or
   F= {k, k+1}, wherein $a \leq k \leq b - 1$; and D={x: $a \leq x \leq b$, $x \neq k$, $x \neq k + 1$, x is an integer} .

14. The method according to claim 13, wherein a value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal; and
   E={x: $k + 1 \leq x \leq q$, x is an integer}, and C={x: $k+1 \leq x \leq q$, x is an integer}.

15. The method according to claim 11 or 12, wherein a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F;

   a third reference signal is further comprised in delay domain-Doppler domain corresponding to the first signal, a location index set of the third reference signal in delay domain corresponding to the first signal is C, and a location index set of the third reference signal in Doppler domain corresponding to the first signal is D;
   F = {j}, wherein $a \leq j \leq b$; D={x: $a \leq x \leq b$, $x \neq j$, x is an integer}; and a is a minimum value of location indexes in Doppler domain corresponding to the first signal, and b is a maximum value of the location indexes in Doppler domain corresponding to the first signal; or F = {k, k+1 }, wherein $a \leq k \leq b - 1$; and D={x: $a \leq x \leq b$, $x \neq k$, $x \neq k + 1$, x is an integer};
   a value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal;
   a value range of elements in B is [a, b], and the elements in B are formed by one or more arithmetic progressions; and
   E={x: $k + 1 \leq x \leq q$, x is an integer}, and C={x: $k + 1 \leq x \leq q$, x is an integer}.

16. The method according to claim 11 or 12, wherein a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F;

    a third reference signal is further comprised in delay domain-Doppler domain corresponding to the first signal, a location index set of the third reference signal in delay domain corresponding to the first signal is C, and a location index set of the third reference signal in Doppler domain corresponding to the first signal is D;
    F={j}, and B={j}, wherein $a \leq j \leq b$; D={x: $a \leq x \leq b$, $x \neq j$, x is an integer}; and a is a minimum value of location indexes in Doppler domain corresponding to the first signal, and b is a maximum value of the location indexes in Doppler domain corresponding to the first signal; or
    F={k, k+1}, and B={k, k+1}, wherein $a \leq k \leq b - 1$; and D={x: $a \leq x \leq b$, $x \neq k$, $x \neq k + 1$, x is an integer};
    a value range of elements in A is [p, k], the elements in A are formed by one or more arithmetic progressions, $p < k < q$, p is a minimum value of location indexes in delay domain corresponding to the first signal, and q is a maximum value of the location indexes in delay domain corresponding to the first signal; and
    E={x: $k + 1 \leq x \leq q$, x is an integer}, and C=E U A.

17. The method according to claim 11 or 12, wherein a location index set of the second reference signal in delay domain corresponding to the first signal is A, a location index set of the second reference signal in Doppler domain corresponding to the first signal is B, a location index set of the first reference signal in delay domain corresponding to the first signal is E, and a location index set of the first reference signal in Doppler domain corresponding to the first signal is F;

    A={x: $p \leq x \leq k$, x is an integer}, $p < k < q$, p is a minimum value of location indexes in delay domain corresponding to the first signal, and q is a maximum value of the location indexes in delay domain corresponding to the first signal; and
    E={x: $k + 1 \leq x \leq q$, x is an integer}.

18. The method according to claim 17, wherein a third reference signal is further comprised in delay domain-Doppler domain corresponding to the first signal, a location index set of the third reference signal in delay domain corresponding to the first signal is C, and a location index set of the third reference signal in Doppler domain corresponding to the first signal is D;

    C=E;
    F={j}, wherein $a \leq j \leq b$; D={x: $a \leq x \leq b$, $x \neq j$, x is an integer}; and a is a minimum value of location indexes in Doppler domain corresponding to the first signal, and b is a maximum value of the location indexes in Doppler domain corresponding to the first signal; or
    F= {k, k+1}, wherein $a \leq k \leq b - 1$; and D={x: $a \leq x \leq b$, $x \neq k$, $x \neq k + 1$, x is an integer}; and
    a value range of B is [a, b], and the elements in B are formed by one or more arithmetic progressions.

19. The method according to claim 17, wherein a third reference signal is further comprised in delay domain-Doppler domain corresponding to the first signal, a location index set of the third reference signal in delay domain corresponding to the first signal is C, and a location index set of the third reference signal in Doppler domain corresponding to the first signal is D;

    C={x: $p \leq x \leq q$, x is an integer};
    F={j}, and B={j}, wherein $a \leq j \leq b$; D={x: $a \leq x \leq b$, $x \neq j$, x is an integer}; and a is a minimum value of location indexes in Doppler domain corresponding to the first signal, and b is a maximum value of the location indexes in Doppler domain corresponding to the first signal; or
    F={k, k+1}, and B={k, k+1}, wherein $a \leq k \leq b - 1$; and D={x: $a \leq x \leq b$, $x \neq k$, $x \neq k + 1$, x is an integer};
    a location index set in Doppler domain corresponding to a delay domain [p, k] of the third reference signal is G; and
    G={x: $mod(max(B) - c, b) \leq x \leq mod(max(B) + b, b)$, $x \neq j$, x is an integer}; or G={x: $mod(max(B) - c, b) \leq x \leq mod(max(B) + b, b)$, $x \neq k$, $x \neq k + 1$, x is an integer}, and c is a positive integer.

20. A communication apparatus, wherein the communication apparatus comprises a unit for performing the method according to any one of claims 1 to 19.

21. A communication apparatus, comprising a processor, wherein the processor is coupled to a memory;

the memory is configured to store program code; and
the processor is configured to invoke the program code from the memory to perform the method according to any one of claims 1 to 19.

22. A communication apparatus, wherein the communication apparatus comprises a logic circuit and an input/output interface;

the logic circuit is configured to determine a first signal;
the input/output interface is configured to output the first signal; and
the logic circuit is further configured to process the first signal, and perform the method according to any one of claims 1 to 10.

23. A communication apparatus, wherein the communication apparatus comprises a logic circuit and an input/output interface;

the logic circuit is configured to determine a first signal;
the input/output interface is configured to output the first signal; and
the logic circuit is configured to process the first signal, and perform the method according to any one of claims 11 to 19.

24. A computer-readable storage medium, wherein the computer-readable storage medium is configured to store instructions, and when the instructions are executed, the method according to any one of claims 1 to 19 is implemented.

25. A computer program product, wherein the computer program product comprises a computer program or instructions, and when the computer program or the instructions are run on a computer, the computer is enabled to perform the method according to any one of claims 1 to 19.

Network device          Terminal device

FIG. 1

From a
demodulator
(from encoder)

To a RF unit
(to RF)

| Modulation (modulation) | Up-sampling (up-sampling) | Pulse shaping (pulse shaping) |

Processing process at a transmit end

From a RF unit
(from RF)

To a demodulator
(to encoder)

| Match filtering (match filtering) | Down-sampling (down-sampling) | Demodulation (de-mod) |

Processing process at a receive end

FIG. 2

Serial-to-parallel conversion → N-point DFT → Subcarrier mapping → M-point IDFT → Parallel-to-serial conversion → Cyclic prefix addition → Digital-to-Analog conversion module →

Channel

Parallel-to-serial conversion ← N-point IDFT ← Subcarrier de-mapping ← M-point IDFT ← Serial-to-parallel conversion ← Cyclic prefix removal ← Analog-to-digital conversion ←

$N < M$

DFT: Discrete Fourier transform

IDFT: Inverse discrete Fourier transform

FIG. 3

OTFS preprocessing

Delay-Doppler
domain signal
mapping

OTFS encoding

Dimension
transform

Generate a baseband
waveform

Data signal →

Pilot signal →

$D$
$(N*M)$

$(U_1DU_2)$

$N*M$ à
$[N,N,...]$

Modulation
(Modulation)
(OFDM/f-OFDM/
UFMC...)

Power
amplifier

To-be-sent signal →

FIG. 4

FIG. 5

EP 4 391 468 A1

OTFS processing

Pilot signal

| Dimension transform | Waveform demodulation |

Data signal ← Equalization ← Channel estimation ← OTFS decoding $(U_1^H D U_2^H)$ ← $[N,N,...]à$ $N*M$ ← Demodulation (Demodulation) (OFDM/f-OFDM/UFMC/...) ← Received signal

FIG. 6

2*2

2*4

4*2

4*4

8*4

■ PTRS    □ Data

## FIG. 7

| First communication apparatus | Second communication apparatus |
|---|---|

S101: Determine a first signal, where the first signal includes a first reference signal and a first transformed signal, in time domain–frequency domain, the first reference signal is carried in one or more symbols of the first signal, and the first transformed signal is obtained by transforming a second reference signal in delay domain–Doppler domain

S102: Send the first signal

S103: Receive a second signal, where the second signal is a received first signal transmitted through a radio channel

S104: Determine phase noise based on the second signal

## FIG. 8

Delay
domain, $\tau$

Doppler domain, $\nu$

Frequency
domain, f

First
reference
signal

Time domain, t

FIG. 9

FIG. 10A

FIG. 10B

FIG. 10C

Delay
domain, $\tau$

Doppler domain, $v$

Frequency
domain, f

First
reference
signal

Second
reference
signal

Data
signal

Time domain, t

FIG. 10D

FIG. 10E

FIG. 10F

FIG. 10G

FIG. 10H

FIG. 10I

FIG. 10J

FIG. 10K

FIG. 10L

FIG. 11

First reference
signal

Second reference
signal

Second signal → | Cyclic prefix removal and fast Fourier transform (–CP&FFT) | → | Subcarrier de-mapping (subcarrier de-mapping) | → | Channel equalization (channel equalization) | → | SFFT | → | Phase noise cancellation (phase noise cancel) | →

FIG. 12

| First communication apparatus | Second communication apparatus |
|---|---|

S201: Determine a first signal, where the first signal includes a first transformed signal and a second transformed signal, in time domain–frequency domain, the first transformed signal is obtained by transforming a second reference signal in delay domain–Doppler domain, and the second transformed signal is obtained by transforming a first reference signal in delay domain–Doppler domain

S202: Send the first signal

S203: Receive a second signal, where the second signal is a received first signal transmitted through a radio channel

S204: Determine phase noise based on the second signal

FIG. 13

First reference signal

Second reference signal

Data signal

Third reference signal

Delay domain, $\tau$

Doppler domain, $\nu$

FIG. 14A

FIG. 14B

FIG. 14C

FIG. 14D

FIG. 14E

Delay
domain, $\tau$

Doppler domain, $\nu$

First
reference
signal

Second
reference
signal

Data
signal

Third
reference
signal

FIG. 14F

Delay
domain, $\tau$

Doppler domain, $\nu$

First
reference
signal

Second
reference
signal

Data
signal

Third
reference
signal

FIG. 14G

FIG. 14H

FIG. 14I

Delay
domain, $\tau$

First
reference
signal

Second
reference
signal

Data
signal

Third
reference
signal

Doppler domain, $\nu$

FIG. 14J

First reference
signal
Second
reference signal
Data signal → ISFFT → Subcarrier mapping (subcarrier mapping) → Inverse fast Fourier transform (IFFT) → Cyclic prefix addition (add CP) →

FIG. 15

First
reference
signal

Second
reference
signal

Second signal → Cyclic prefix removal and fast Fourier transform (–CP&FFT) → Subcarrier de-mapping (subcarrier de-mapping) → SFFT → Channel equalization (channel equalization) → Phase noise cancellation (phase noise cancel) →

FIG. 16

Communication apparatus 170

1701

Transceiver unit

1702

Processing unit

FIG. 17

1801

Processor

1802

Memory

1803

Program code

1804

Transceiver

Communication apparatus 180

FIG. 18

1901

Logic circuit

Chip

190

1902

Input/Output interface

FIG. 19

<div align="center">

**INTERNATIONAL SEARCH REPORT**

</div>

| | International application No. |
|---|---|
| | **PCT/CN2022/114851** |

| **A.** | **CLASSIFICATION OF SUBJECT MATTER** |
|---|---|
| | H04L 27/26(2006.01)i;  H04L 5/00(2006.01)i |

According to International Patent Classification (IPC) or to both national classification and IPC

| **B.** | **FIELDS SEARCHED** |
|---|---|

Minimum documentation searched (classification system followed by classification symbols)

    H04L; H04W

Documentation searched other than minimum documentation to the extent that such documents are included in the fields searched

Electronic data base consulted during the international search (name of data base and, where practicable, search terms used)

    CNTXT; ENTXT; 3GPP; VEN; CNKI: 相位噪声, 时延, 多普勒, 相位补偿, 相位跟踪, 参考信号, 正交时频空间, 正交时频扩展; phase noise, delay, doppler, phase compensation, phase tracking, reference signal, RS, PCRS, PTRS, PT-RS, orthogonal time frequency space, orthogonal time frequency spread, OTFS

| **C.** | **DOCUMENTS CONSIDERED TO BE RELEVANT** | |
|---|---|---|
| Category* | Citation of document, with indication, where appropriate, of the relevant passages | Relevant to claim No. |
| Y | CN 109565392 A (LG ELECTRONICS INC.) 02 April 2019 (2019-04-02)<br>    claims 1-15, and description, paragraphs [0301]-[0399] | 1-25 |
| Y | CN 113098818 A (BEIJING JIAOTONG UNIVERSITY) 09 July 2021 (2021-07-09)<br>    claims 1-10 | 1-25 |
| A | CN 110024322 A (IDAC HOLDINGS, INC.) 16 July 2019 (2019-07-16)<br>    entire document | 1-25 |
| A | US 2021014021 A1 (SAMSUNG ELECTRONICS CO., LTD.) 14 January 2021 (2021-01-14)<br>    entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/114851**

| Patent document cited in search report | | | Publication date (day/month/year) | Patent family member(s) | | | Publication date (day/month/year) |
|---|---|---|---|---|---|---|---|
| CN | 109565392 | A | 02 April 2019 | AU | 2017304162 | A1 | 07 February 2019 |
| | | | | MX | 2019001088 | A | 30 May 2019 |
| | | | | WO | 2018021867 | A1 | 01 February 2018 |
| | | | | JP | 2019528601 | A | 10 October 2019 |
| | | | | US | 2021329609 | A1 | 21 October 2021 |
| | | | | BR | 112019001568 | A2 | 07 May 2019 |
| | | | | EP | 3487105 | A1 | 22 May 2019 |
| | | | | KR | 20190018009 | A | 20 February 2019 |
| | | | | SG | CN 11201900448 U | A | 27 February 2019 |
| | | | | RU | 2713407 | C1 | 05 February 2020 |
| | | | | US | 2020304256 | A1 | 24 September 2020 |
| CN | 113098818 | A | 09 July 2021 | | None | | |
| CN | 110024322 | A | 16 July 2019 | JP | 2019537856 | A | 26 December 2019 |
| | | | | KR | 20190071685 | A | 24 June 2019 |
| | | | | EP | 3520304 | A1 | 07 August 2019 |
| | | | | US | 2020008228 | A1 | 02 January 2020 |
| | | | | WO | 2018064313 | A1 | 05 April 2018 |
| | | | | JP | 2021073775 | A | 13 May 2021 |
| | | | | RU | 2019108999 | A | 28 September 2020 |
| US | 2021014021 | A1 | 14 January 2021 | EP | 3729711 | A1 | 28 October 2020 |
| | | | | WO | 2019160379 | A1 | 22 August 2019 |
| | | | | KR | 20200111200 | A | 28 September 2020 |
| | | | | GB | 201902050 | D0 | 03 April 2019 |
| | | | | GB | 201802574 | D0 | 04 April 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111083177